(19) **Europäisches Patentamt / European Patent Office / Office européen des brevets**

(11) **EP 4 030 838 B1**

(12) **EUROPEAN PATENT SPECIFICATION**

(45) Date of publication and mention
of the grant of the patent:
**21.05.2025 Bulletin 2025/21**

(21) Application number: **19948164.9**

(22) Date of filing: **30.09.2019**

(51) International Patent Classification (IPC):
*H04W 72/00* (2023.01)      *H04W 28/08* (2023.01)
*H04L 5/00* (2006.01)      *H04W 72/566* (2023.01)
*H04W 28/02* (2009.01)      *H04W 92/18* (2009.01)

(52) Cooperative Patent Classification (CPC):
**H04W 28/0278; H04W 28/02; H04W 28/0858;
H04W 28/0875; H04W 28/0925; H04W 72/569;**
H04W 4/40; H04W 72/21; H04W 92/18

(86) International application number:
**PCT/CN2019/109746**

(87) International publication number:
**WO 2021/062820 (08.04.2021 Gazette 2021/14)**

(54) **COMMUNICATION METHOD AND DEVICE**

KOMMUNIKATIONSVERFAHREN UND -VORRICHTUNG

PROCÉDÉ ET DISPOSITIF DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.07.2022 Bulletin 2022/29**

(60) Divisional application:
**25165572.6**

(73) Proprietor: **Huawei Technologies Co., Ltd.
Shenzhen, Guangdong 518129 (CN)**

(72) Inventors:
- **LI, Xiangyu
  Shenzhen, Guangdong 518129 (CN)**
- **WANG, Jun
  Shenzhen, Guangdong 518129 (CN)**
- **XU, Haibo
  Shenzhen, Guangdong 518129 (CN)**
- **PENG, Wenjie
  Shenzhen, Guangdong 518129 (CN)**
- **DAI, Mingzeng
  Shenzhen, Guangdong 518129 (CN)**

(74) Representative: **Maiwald GmbH
Elisenhof
Elisenstraße 3
80335 München (DE)**

(56) References cited:
**WO-A1-2018/117774      CN-A- 107 950 047
US-A1- 2018 317 123**

- **LENOVO ET AL: "Remaining issue for
prioritization for NR V2X", vol. RAN WG2, no.
Prague, Czech Republic; 20190826 - 20190830,
16 August 2019 (2019-08-16), XP051768062,
Retrieved from the Internet <URL:http://
www.3gpp.org/ftp/tsg_ran/WG2_RL2/
TSGR2_107/Docs/R2-1910283.zip> [retrieved on
20190816]**

(Cont. next page)

- **ERICSSON: "gNB-Scheduled Resource Allocation for Sidelink", 3GPP DRAFT; R2-1907354 - GNB-SCHEDULED RESOURCE ALLOCATION FOR SIDELINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France, XP051730793**
- **MEDIATEK INC.: "Prioritization of UL and SL transmission", 3GPP DRAFT; R2-1906337 PRIORITIZATION OF UL AND SL TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, US; 20190513 - 20190517, 13 May 2019 (2019-05-13), Mobile Competence Centre ; 650, route des Lucioles ; F-06921 Sophia-Antipolis Cedex ; France, XP051729804**
- **HUAWEI, HISILICON: "Relative QoS handling between NR SL and NR Uu", 3GPP DRAFT; R2-1907456 RELATIVE QOS HANDLING BETWEEN NR SL AND NR UU, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France, XP051730892**
- **ERICSSON: "gNB-Scheduled Resource Allocation for Sidelink", 3GPP DRAFT; R2-1907354 - GNB-SCHEDULED RESOURCE ALLOCATION FOR SIDELINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France, XP051730793**
- **VIVO: "Remaining issues on SR for NR Sidelink mode 1", 3GPP DRAFT; R2-1905840_REMAINING ISSUES ON SR FOR NR SIDELINK MODE 1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France, XP051729338**

## Description

### TECHNICAL FIELD

This application relates to the field of wireless communication technologies, and in particular, to a communication method and apparatus.

### BACKGROUND

In a vehicle to everything (vehicle to everything, V2X) communication system, a terminal device not only can communicate with a network device through an uplink (uplink, UL), but also can communicate with another terminal device through a sidelink (sidelink, SL). In a conventional technology, when uplink transmission conflicts with sidelink transmission, the terminal device may abandon transmission on a transmission link or reduce a transmit power on the transmission link based on a priority comparison result. A principle of the priority comparison is that if a message related to a random access process (random access process, RACH) or an emergency call (emergency call) exists on the uplink, uplink transmission is preferably performed. If no message related to the RACH or the emergency call exists on the uplink, a priority of a to-be-transmitted service on the sidelink is further compared with a preset priority threshold. If the priority of the o-be-transmitted service on the sidelink is higher than a priority indicated by the preset priority threshold, sidelink transmission is preferably performed. Otherwise, if the priority of the o-be-transmitted service on the sidelink is lower than or equal to a priority indicated by the preset priority threshold, uplink transmission is preferably performed.

During priority comparison, in addition to the RACH and the emergency call, only the priority of the o-be-transmitted service on the sidelink is considered, and a priority of the o-be-transmitted service on the uplink is not considered. Therefore, when some to-be-transmitted services with higher priorities exist on the uplink, for example, an ultra-reliable low-latency communication (ultra reliable and low latency communication, URLLC) service, the terminal device cannot preferably send a to-be-transmitted service on the sidelink. Consequently, transmission performance of a service with a higher priority on the sidelink cannot be ensured.

LENOVO ET AL: "Remaining issue for prioritizing for NR V2X", R2-1910283 describes UL/SL prioritization for NR V2X sidelink transmission.

### SUMMARY

Embodiments of this application provide a communication method and apparatus, to effectively ensure transmission performance of services with higher priorities on an uplink and a sidelink when uplink transmission and sidelink transmission both exist.

The present invention is defined by the subject-matter of the independent claims. Additional features of the invention are presented in the dependent claims.

According to a first aspect, an embodiment of this application provides a communication method. The method may be performed by a terminal device, or may be performed by an apparatus (such as a processor and/or a chip) in a terminal device. The method includes: A terminal device determines that uplink transmission and sidelink transmission both exist; and when one or more of a first condition, a second condition, a third condition, and a fourth condition are not met, the terminal device performs the sidelink transmission; or when any one of one or more of a first condition, a second condition, a third condition, and a fourth condition is met, the terminal device performs the uplink transmission, where

the first condition includes one or more of the following: a highest priority of a logical channel included in an uplink medium access control protocol data unit UL MAC PDU sent on an uplink is higher than a priority indicated by a first threshold, a priority corresponding to an uplink buffer status report medium access control control element UL BSR MAC CE included in the UL MAC PDU is higher than the priority indicated by the first threshold, and a priority corresponding to an uplink scheduling request UL SR sent on the uplink is higher than the priority indicated by the first threshold;

the second condition includes one or more of the following: a priority corresponding to a sidelink buffer status report medium access control control element SL BSR MAC CE included in the UL MAC PDU is higher than a priority indicated by a second threshold, and a priority corresponding to a sidelink scheduling request SL SR sent on the uplink is higher than the priority indicated by the second threshold;

the third condition includes one or more of the following: the priority corresponding to the SL BSR MAC CE included in the UL MAC PDU is higher than a highest priority of a sidelink logical channel included in a sidelink medium access control protocol data unit SL MAC PDU, and the priority corresponding to the SL SR is higher than the highest priority of the sidelink logical channel included in the SL MAC PDU; and

the fourth condition includes: the highest priority of the sidelink logical channel included in the SL MAC PDU is lower than or equal to the priority indicated by the second threshold.

In this embodiment of this application, by setting the foregoing priority comparison conditions, priorities of a to-be-transmitted service on the uplink and a to-be-transmitted service on a sidelink can be determined more accurately. Further, the uplink transmission or the sidelink transmission is performed based on the priorities, thereby effectively ensuring transmission performance of services with higher priorities on the uplink and the sidelink. In addition, different priority thresholds may be set for a service triggered by an uplink logical channel and a service triggered by a sidelink logical channel, where the services are transmitted on the uplink. Therefore, the priority of the to-be-transmitted service on the uplink can be measured more accurately.

With reference to the first aspect, in a possible design of the first aspect, the priority corresponding to the UL BSR MAC CE is a priority of a logical channel for triggering an uplink buffer status report UL BSR, a priority of a logical channel on which to-be-transmitted data exists on the uplink, or a priority of a logical channel associated with a buffer size BS included in the UL BSR MAC CE;

the priority corresponding to the UL SR is a priority of a logical channel for triggering the UL SR;
the priority corresponding to the SL BSR MAC CE is a priority of a sidelink logical channel for triggering a sidelink buffer status report SL BSR, a priority of a sidelink logical channel on which to-be-transmitted data exists on a sidelink, or a priority of a sidelink logical channel associated with a buffer size BS included in the SL BSR MAC CE; and
the priority corresponding to the SL SR is a priority of a sidelink logical channel for triggering the SL SR.

With reference to the first aspect, in a possible design of the first aspect, the method further includes: When one or more of the first condition, the second condition, the third condition, the fourth condition, and a fifth condition are not met, the terminal device performs the sidelink transmission; or when any one of one or more of the first condition, the second condition, the third condition, the fourth condition, and a fifth condition is met, the terminal device performs the uplink transmission.

The fifth condition includes: one or more MAC CEs specified or configured as follows are sent on the uplink: a cell radio network temporary identity C-RNTI MAC CE, a configured grant confirmation MAC CE, a non-padding link buffer status report BSR MAC CE, a non-padding sidelink buffer status report SL BSR MAC CE, and a power headroom report PHR MAC CE.

With reference to the first aspect, in a possible design of the first aspect, the method further includes: when one or more of the first condition, the second condition, the third condition, the fourth condition, the fifth condition, and a sixth condition are not met, the terminal device performs the sidelink transmission; or when any one of one or more of the first condition, the second condition, the third condition, the fourth condition, the fifth condition, and a sixth condition is met, the terminal device performs the uplink transmission. The sixth condition is: a random access process RACH message or an emergency call message is sent on the uplink.

With reference to the first aspect, in a possible design of the first aspect, the uplink transmission is initial transmission or re-transmission, and the sidelink transmission is initial transmission or re-transmission.

With reference to the first aspect, in a possible design of the first aspect, the uplink supports a first communication standard or a second communication standard, and the sidelink supports the first communication standard or the second communication standard.

According to a second aspect, an embodiment of this application provides a communication method. The method may be performed by a terminal device, or may be performed by an apparatus (such as a processor and/or a chip) in a terminal device. The method includes: A terminal device determines that sending of an uplink scheduling request UL SR and sending of a sidelink scheduling request SL SR both exist; and when a priority corresponding to the UL SR is lower than or equal to a priority indicated by a first threshold and a priority corresponding to the SL SR is higher than a priority indicated by a second threshold, the terminal device sends the SL SR; or when a priority corresponding to the UL SR is higher than a priority indicated by a first threshold or a priority corresponding to the SL SR is lower than or equal to a priority indicated by a second threshold, the terminal device sends the UL SR.

In this embodiment of this application, when the sending of the UL SR and the sending of the SL SR both exist, the priorities of the UL SR and the SL SR may be determined by using the foregoing priority comparison conditions, thereby sending the UL SR or the SL SR.

With reference to the second aspect, in a possible design of the second aspect, the priority corresponding to the UL SR is a priority of a logical channel for triggering the UL SR; and the priority corresponding to the SL SR is a priority of a sidelink logical channel for triggering the SL SR.

According to a third aspect, an embodiment of this application provides a communication apparatus. The apparatus has a function of implementing the terminal device in any one of the first aspect or the possible designs of the first aspect. The apparatus may be a terminal device, for example, a handheld terminal device, a vehicle-mounted terminal device, vehicle user equipment, or a road side unit, or may be an apparatus, for example, a chip, included in a terminal device, or may be an apparatus including a terminal device. A function of the foregoing terminal device may be implemented by hardware, or may be implemented by hardware by executing corresponding software. The hardware or the software includes one or more modules corresponding to the foregoing function.

In a possible design, a structure of the apparatus includes a processing module and a transceiver module. The processing module is configured to support the apparatus in performing a corresponding function of the terminal device in any one of the first aspect or the designs of the first aspect, or performing a corresponding function of the terminal device in any one of the second aspect or the designs of the second aspect. The transceiver module is configured to support communication between the apparatus and another communication device. For example, when the apparatus is a terminal device, the apparatus may send sidelink information to the another terminal device. The communication apparatus may further include a storage module. The storage module is coupled to the processing module, and stores program instructions and data that are necessary for the apparatus. In an example, the processing module may be a processor, a communication module may be a transceiver, and the storage module may be a memory. The memory may be integrated with the processor, or may be disposed separately from the processor. This is not limited in this application.

In another possible design, a structure of the apparatus includes a processor, and may further include a memory. The processor is coupled to the memory, and may be configured to execute computer program instructions stored in the memory, so that the apparatus performs the method in any one of the first aspect or the possible designs of the first aspect, or performs a corresponding function of the terminal device in any one of the second aspect or the designs of the second aspect. Optionally, the apparatus further includes a communication interface, and the processor is coupled to the communication interface. When the apparatus is the terminal device, the communication interface may be a transceiver or an input/output interface. When the apparatus is the chip included in the terminal device, the communication interface may be an input/output interface of the chip. Optionally, the transceiver may be a transceiver circuit, and the input/output interface may be an input/output circuit.

According to a fourth aspect, an embodiment of this application provides a chip system. The chip system includes a processor, where the processor is coupled to a memory, the memory is configured to store a program or instructions. When the program or the instructions are executed by the processor, the chip system is enabled to implement the method in any one of the first aspect or the possible designs of the first aspect, or implement the method in any one of the second aspect or the possible designs of the second aspect.

Optionally, the chip system further includes an interface circuit, and the interface circuit is configured to exchange code instructions with the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

According to a fifth aspect, an embodiment of this application provides a computer-readable storage medium. The computer-readable storage medium stores a computer program or instructions. When the computer program or the instructions are executed, a computer is enabled to perform the method in any one of the first aspect or the possible designs of the first aspect, or perform the method in any one of the second aspect or the possible designs of the second aspect.

According to a sixth aspect, an embodiment of this application provides a computer program product. When a computer reads and executes the computer program product, the computer is enabled to perform the method in any one of the first aspect or the possible designs of the first aspect, or perform the method in any one of the second aspect or the possible designs of the second aspect.

According to a seventh aspect, an embodiment of this application provides a communication system. The communication system includes a network device and/or at least one terminal device.

## BRIEF DESCRIPTION OF DRAWINGS

FIG. 1 is a schematic diagram of a network architecture of a communication system to which an embodiment of this application is applicable;
FIG. 2 is a schematic flowchart of a communication method according to an embodiment of this application;
FIG. 3 is a schematic flowchart of a specific example of a communication method according to an embodiment of this application;

FIG. 4 is a schematic flowchart of another communication method according to an embodiment of this application;

FIG. 5 is a schematic flowchart of still another communication method according to an embodiment of this application;

FIG. 6 is a schematic diagram of a structure of a communication apparatus according to an embodiment of this application; and

FIG. 7 is a schematic diagram of another structure of a communication apparatus according to an embodiment of this application.

## DESCRIPTION OF EMBODIMENTS

To make objectives, technical solutions, and advantages of embodiments of this application clearer, the following further describes embodiments of this application in detail with reference to the accompanying drawings.

The technical solutions of embodiments of this application may be used in various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WIMAX) communication system, and a 5th generation (5th generation, 5G) system or a new radio (new radio, NR) system, or is used in a future communication system or another similar communication system.

The technical solutions in embodiments of this application may be used in technical fields such as unmanned driving (unmanned driving), advanced driver assistance systems (advanced driver assistance systems, ADAS), intelligent driving (intelligent driving), connected driving (connected driving), intelligent network driving (Intelligent network driving), car sharing (car sharing), a smart/an intelligent car (smart/intelligent car), a digital car (digital car), an unmanned car (unmanned car/driverless car/pilotless car/automobile), the internet of vehicles (Internet of vehicles, IoV), a self-driving car (self-driving car/autonomous car), cooperative vehicle infrastructure (cooperative vehicle infrastructure, CVIS), an intelligent transportation system (intelligent transportation system, ITS), and vehicular communication (vehicular communication).

In addition, the technical solutions provided in embodiments of this application may be applied to a cellular link, or may be applied to a link between devices, for example, a device to device (device to device, D2D) link. The D2D link or a V2X link may also be referred to as a sidelink, a secondary link, a sidelink, or the like. In embodiments of this application, the foregoing terms all refer to links established between devices of a same type, and have a same meaning. The link established between devices of a same type may be a link between terminal devices, a link between base stations, a link between relay nodes, or the like. This is not limited in embodiments of this application.

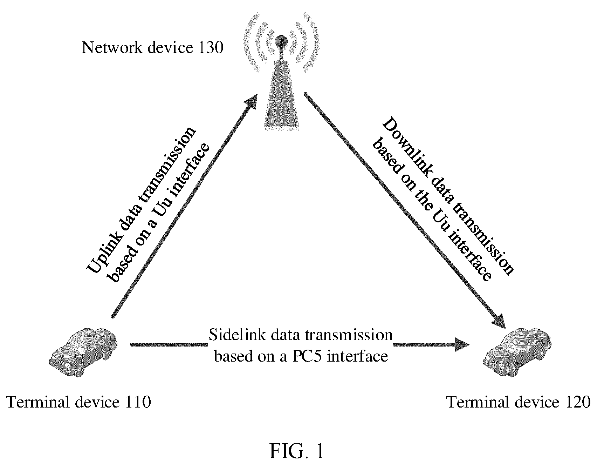

FIG. 1 is a schematic diagram of a network architecture of a communication system to which an embodiment of this application is applicable. The communication system 0 includes a terminal device 110, a terminal device 120, and a network device 130. The network device may communicate with at least one terminal device (such as the terminal device 110) through an uplink (uplink, UL) and a downlink (downlink, DL), and a communication interface between the network device and the terminal device is a Uu interface. One terminal device may communicate with another terminal device through a sidelink (sidelink, SL). A communication interface between the terminal devices is a PC5 interface. The sidelink may also be understood as a direct communication link between the terminal devices.

Sidelink-based communication may use at least one of the following channels: a physical sidelink shared channel (physical sidelink shared channel, PSSCH), configured to carry sidelink data information; a physical sidelink control channel (physical sidelink control channel, PSCCH), configured to carry sidelink control information (sidelink control information, SCI); and a physical sidelink feedback channel (physical sidelink feedback channel, PSFCH), configured to carry sidelink HARQ feedback information.

The network device in FIG. 1 may be an access network device, for example, a base station. The access network device corresponds to different devices in different systems. For example, the access network device may correspond to an eNB in a 4th generation (4th generation, 4G) mobile communication technology system, and correspond to a 5G access network device, for example, a gNB, in a 5G system. The technical solutions provided in embodiments of this application may also be used in a future mobile communication system, for example, a 6G or 7G communication system. Therefore, the network device in FIG. 1 may also correspond to an access network device in the future mobile communication system.

It should be understood that there may be a plurality of network devices in the communication system, and each network device may provide a service for a plurality of terminal devices. A quantity of network devices and a quantity of terminal devices in the communication system are not limited in embodiments of this application. The network device in FIG. 1 and each of some or all of the plurality of terminal devices may implement the technical solutions provided in embodiments of this application. In addition, the terminal device in FIG. 1 is described by using a vehicle-mounted terminal device or a vehicle as an example. It should be understood that the terminal device in this embodiment of this application is not limited thereto. The terminal device may alternatively be a mobile phone, a vehicle, a vehicle-mounted device, a vehicle-mounted module, a roadside unit, a pedestrian handheld device, or a massive machine type of communication (massive machine type of communication, mMTC) terminal device such as a smart water meter and an electric meter in the internet of things.

The following describes some terms in embodiments of this application, to facilitate understanding of a person skilled in the art.

(1) A terminal device may also be referred to as user equipment (user equipment, UE), a mobile station (mobile station, MS), a mobile terminal (mobile terminal, MT), or the like, and is a device that provides voice and/or data connectivity for a user. The terminal device may communicate with a core network through a radio access network (radio access network, RAN), and exchange a voice and/or data with the RAN. For example, the terminal device may be a handheld device, a vehicle-mounted device, vehicle user equipment, or the like that has a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn by a user or integrated into clothes or an accessory of a user. The wearable device is not only a hardware device, but also implements a powerful function through software support, a data exchange, and cloud interaction. In a broad sense, wearable intelligent devices include full-featured and large-sized devices that can implement all or some of functions without depending on smartphones, for example, smart watches or smart glasses, and include devices that focus only on one type of application function and need to collaboratively work with other devices such as smartphones, for example, various smart bands, smart helmets, or smart jewelry for monitoring physical signs.

The terminal device in embodiments of this application may alternatively be a vehicle-mounted module, vehicle-mounted module, vehicle-mounted component, vehicle-mounted chip, or vehicle-mounted unit that a vehicle is equipped with and that is used as one or more components or units. The vehicle may use the built-in vehicle-mounted module, vehicle-mounted module, vehicle-mounted component, vehicle-mounted chip, or vehicle-mounted unit to implement the method in this application.

(2) A network device is a device that is in a network and that is configured to connect a terminal device to a wireless network. The network device may be a node in a radio access network, and may also be referred to as a base station, or may be referred to as a radio access network (radio access network, RAN) node (or device). The network device may be configured to: mutually convert a received over-the-air frame and an internet protocol (IP) packet, and serve as a router between the terminal device and a remaining part of an access network. The remaining part of the access network may include an IP network. The network device may further coordinate attribute management of an air interface. For example, the network device may include a long term evolution (long term evolution, LTE) system or an evolved NodeB (evolved NodeB, eNB or e-NodeB) in an LTE-advanced (LTE-Advanced, LTE-A) system, for example, a conventional macro base station eNB and a micro base station eNB in a heterogeneous network scenario; or may include a next generation NodeB (next generation NodeB, gNB) in a 5th generation (5th generation, 5G) new radio (new radio, NR) system; or may further include a transmission reception point (transmission reception point, TRP), a home base station (for example, a home evolved NodeB or a home NodeB (HNB)), a baseband unit (baseband unit, BBU), a baseband pool BBU pool, a Wi-Fi access point (access point, AP), or the like; or may further include a centralized unit (centralized unit, CU) and a distributed unit (distributed unit, DU) in a cloud access network (cloud radio access network, CloudRAN) system. This is not limited in embodiments of this application. For another example, a network device in a V2X technology is a road side unit (road side unit, RSU). The RSU may be a fixed infrastructure entity supporting a V2X application, and may exchange a message with another entity supporting the V2X application.

(3) Terms "system" and "network" may be used interchangeably in embodiments of this application. A plurality of means two or more. In view of this, "a plurality of" may also be understood as "at least two" in embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects, unless otherwise specified.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

## Embodiment 1

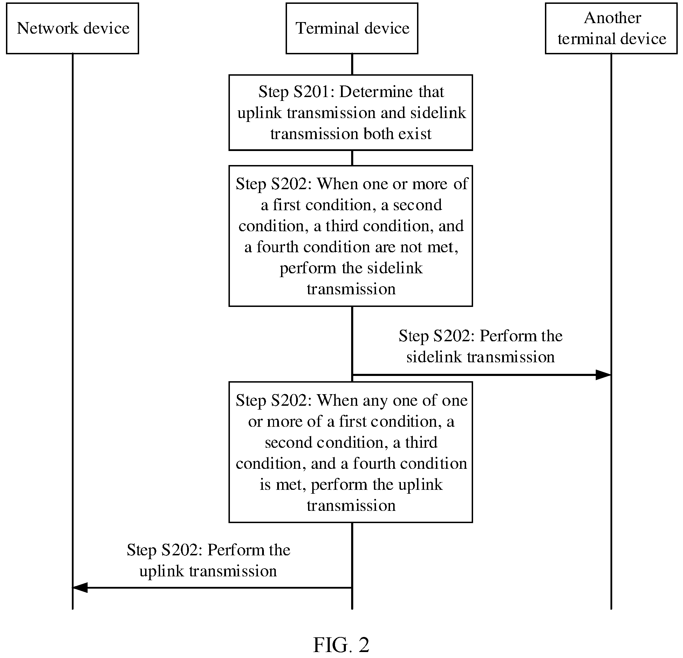

FIG. 2 is a schematic flowchart of a communication method according to an embodiment of this application. The method specifically includes the following step S201 and step S202:

Step S201: A terminal device determines that uplink transmission and sidelink transmission both exist.

The uplink transmission may be performed on a physical uplink shared channel (physical uplink shared channel, PUSCH) and/or a physical uplink control channel (physical uplink control channel, PUCCH), and the sidelink transmission may be performed on a PSSCH. Further, the uplink transmission may be initial transmission or re-transmission, and the sidelink transmission may also be initial transmission or re-transmission.

In step S201, the terminal device may determine that the uplink transmission and the sidelink transmission both exist. That the uplink transmission and the sidelink transmission both exist may be that a time domain resource used by the uplink transmission and a time domain resource used by the sidelink transmission partially or completely overlap.

In a possible design, not only the terminal device needs to perform both the uplink transmission and the sidelink transmission, but also the uplink transmission conflicts with the sidelink transmission. In this embodiment of this application, the uplink transmission may conflict with the sidelink transmission in a plurality of possible scenarios. For example, that the uplink transmission conflicts with the sidelink transmission may be that the time domain resource used by the uplink transmission and the time domain resource used by the sidelink transmission partially or completely overlap and the uplink transmission and the sidelink transmission share/use a same carrier (carriers). For another example, the uplink transmission conflicts with the sidelink transmission may alternatively be that the time domain resource used by the uplink transmission and the time domain resource used by the sidelink transmission partially or completely overlap, and the uplink transmission and the sidelink transmission use different carriers, but share/use a same transmit chain Tx chain and power budget. The transmit chain Tx chain refers to a radio frequency transmit channel, and may also be referred to as a radio frequency transmit link. The power budget may also be referred to as a power target.

Step S202: When one or more of a first condition, a second condition, a third condition, and a fourth condition are not met, the terminal device performs the sidelink transmission; or when any one of one or more of a first condition, a second condition, a third condition, and a fourth condition is met, the terminal device performs the uplink transmission.

It should be understood that the technical solution described in step S202 may be applied to a scenario in which the uplink transmission and the sidelink transmission both exist, and may also be applied to a scenario in which the uplink transmission and the sidelink transmission both exist and the uplink transmission conflicts with the sidelink transmission. Optionally, the technical solution described in step S202 may further be applied to a scenario of a cross-radio access technology (cross-radio access technology, cross-RAT), to be specific, the uplink and the sidelink may support same or different communication standards. For example, the uplink may support a first communication standard or a second communication standard, and the sidelink may support the first communication standard or the second communication standard. The first communication standard may be NR, and the second communication standard may be LTE; or the first communication standard may be LTE, and the second communication standard may be NR.

Step S202 may alternatively be understood as that if any one of one or more of the first condition, the second condition, the third condition, and the fourth condition is met, the terminal device preferably performs the uplink transmission. Otherwise, if one or more of the first condition, the second condition, the third condition, and the fourth condition are not met, the terminal device preferably performs the sidelink transmission.

In this embodiment of this application, the terminal device preferably performs the uplink transmission means that the terminal device performs only the uplink transmission and abandons the sidelink transmission; the terminal device simultaneously performs the uplink transmission and the sidelink transmission, but reduces a transmit power on the sidelink; or the terminal device first performs the uplink transmission, and then performs the sidelink transmission. Similarly, the terminal device preferably performs the sidelink transmission means that the terminal device performs only the sidelink transmission and abandons the uplink transmission; the terminal device simultaneously performs the uplink transmission and the sidelink transmission, but reduces a transmit power on the uplink; or the terminal device first performs the sidelink transmission, and then performs the uplink transmission.

As can be learned from step S202, the terminal device may determine, based on one or more conditions, whether to preferably perform the uplink transmission or the sidelink transmission. In this embodiment of this application, if the one or more conditions used to determine that the terminal device should preferably perform the uplink transmission or the sidelink transmission are considered as a condition set, a process in which the terminal device determines whether to preferably perform the uplink transmission or the sidelink transmission may further be that the terminal device determines that whether each condition in the condition set is met. If any condition in the condition set is met, the terminal device may determine to preferably perform the uplink transmission. Otherwise, if none of conditions in the condition set is met, the terminal device may determine to preferably perform the sidelink transmission.

It may be understood that the condition set may include one or more of the first condition, the second condition, the third condition, and the fourth condition; may include one or more of the first condition, the second condition, the third condition, the fourth condition, and a fifth condition; may include one or more of the first condition, the second condition, the third condition, the fourth condition, a fifth condition, and a sixth condition; or may include one or more of the first condition, the second condition, the third condition, the fourth condition, and a sixth condition.

Specifically, the first condition may include one or more of the following sub conditions:

(1) A highest priority of a logical channel included in an uplink medium access control protocol data unit (uplink medium access control protocol data unit, UL MAC PDU) sent on the uplink is higher than a priority indicated by a first threshold.

(2) A priority corresponding to an uplink buffer status report medium access control control element (uplink buffer status report medium access control control element, UL BSR MAC CE) included in the UL MAC PDU is higher than the priority indicated by the first threshold.

(3) A priority corresponding to an uplink scheduling request (uplink scheduling request, UL SR) sent on the uplink is higher than the priority indicated by the first threshold.

(4) A priority of a medium access control control element (medium access control control element, MAC CE) included in the UL MAC PDU is higher than the priority indicated by the first threshold.

(5) A priority corresponding to an uplink acknowledgment/negative acknowledgment UL ACK/NACK feedback sent on the uplink is higher than the priority indicated by the first threshold.

(6) A priority corresponding to a configured grant confirmation medium access control control element (configured grant confirmation MAC CE) included in the UL MAC PDU is higher than or equal to the priority indicated by the first threshold.

The second condition may include one or more of the following sub conditions:

(1) A priority corresponding to a sidelink buffer status report medium access control control element (sidelink buffer status report medium access control control element, SL BSR MAC CE) included in the UL MAC PDU is higher than a priority indicated by a second threshold.

(2) A priority corresponding to a sidelink scheduling request (sidelink scheduling request, SL SR) sent on the uplink is higher than the priority indicated by the second threshold.

(3) A priority corresponding to a sidelink acknowledgment/negative acknowledgment SL ACK/NACK feedback sent on the uplink is higher than the priority indicated by the second threshold.

The third condition may include one or more of the following sub conditions:

(1) The priority corresponding to the SL BSR MAC CE included in the UL MAC PDU is higher than a highest priority of a sidelink logical channel included in a sidelink medium access control protocol data unit SL MAC PDU.

(2) The priority corresponding to the SL SR is higher than the highest priority of the sidelink logical channel included in the SL MAC PDU.

The fourth condition may include: the highest priority of the sidelink logical channel included in the SL MAC PDU is lower than or equal to the priority indicated by the second threshold.

The fifth condition may include: one or more MAC CEs specified or configured as follows are sent on the uplink: a cell radio network temporary identity C-RNTI MAC CE, a configured grant confirmation MAC CE, a non-padding uplink buffer status report non-padding UL BSR MAC CE, a non-padding sidelink buffer status report non-padding SL BSR MAC CE, a power headroom report PHR MAC CE, a non-padding UL BSR MAC CE corresponding to a specified logical channel, a non-padding SL BSR MAC CE corresponding to a specified sidelink logical channel, a non-padding UL BSR MAC CE corresponding to a specified service, and a non-padding SL BSR MAC CE corresponding to a specified service.

The sixth condition may include: a random access process RACH message or an emergency call message is sent on the uplink. The RACH message may be an MSG 1 or an MSG 3 in a RACH procedure. The emergency call message may be a message in an emergency PDU connection.

It should be noted that in this embodiment of this application, the first condition, the second condition, and the third condition each may include one or more sub conditions. When a condition includes a plurality of sub conditions, if any one or more of sub conditions in the condition are met, it may be considered that the condition is met. The first condition is used as an example. If any one or more conditions in the first condition are met, it may be considered that the first condition is met.

In addition, the terminal device may determine, in a preset order, whether each condition in a condition set is met. For example, the terminal device may sequentially perform determining in an order of the sixth condition, the fifth condition, the first condition, the second condition, the third condition, and the fourth condition.

The following describes various information transmitted by the terminal device on the uplink and the sidelink in the foregoing conditions and corresponding priorities.

In this embodiment of this application, the terminal device may send a UL MAC PDU to a network device through the uplink, where the UL MAC PDU is carried on a PUSCH. The UL MAC PDU may include an uplink medium access control control element (uplink medium access control control element, UL MAC CE) and an uplink medium access service data unit (uplink medium access service data unit, UL MAC SDU). The UL MAC CE may include a UL BSR MAC CE, an SL BSR MAC CE, and various other types of MAC CEs. For example, the various other types of MAC CEs may include a cell radio network temporary identity MAC CE, a configured grant confirmation MAC CE, a non-padding uplink buffer status report non-padding UL BSR MAC CE, a non-padding sidelink buffer status report non-padding SL BSR MAC CE, a power headroom report PHR MAC CE, and the like. The UL MAC SDU refers to a logical channel configured to carry data. It should be noted that in the descriptions of this application, an individual logical channel may be understood as an uplink logical channel. It should be understood that in this application, the UL BSR MAC CE includes a non-padding UL BSR MAC CE and a padding uplink buffer status report padding UL BSR MAC CE, and the SL BSR MAC CE includes a non-padding SL BSR MAC CE and a padding uplink buffer status report padding SL BSR MAC CE.

The terminal device may further send information such as a scheduling request (scheduling request, SR), channel state information (channel state information, CSI), and an ACK/NACK to the network device through the uplink. The information, such as the SR, the CSI, and the ACK/NACK, is carried on a PUCCH. The SR may include a UL SR and an SL SR. The UL SR is a scheduling request triggered by an uplink logical channel. The SL SR is a scheduling request triggered by a sidelink logical channel.

In addition, the terminal device may further send an SL MAC PDU to another terminal device through the sidelink. The SL MAC PDU may include an SL MAC SDU. The SL MAC SDU is a sidelink logical channel carrying control information and/or data information.

In view of this, the priority corresponding to the UL BSR MAC CE in the foregoing conditions may be a priority of a logical channel for triggering an uplink buffer status report UL BSR, a priority of a logical channel on which to-be-transmitted data exists on the uplink, or a priority of a logical channel associated with a buffer size BS included in the UL BSR MAC CE. Optionally, the priority corresponding to the UL BSR MAC CE may alternatively be a highest priority of a logical channel for triggering a UL BSR, a highest priority of a logical channel on which to-be-transmitted data exists on the uplink, or a highest priority of a logical channel associated with a buffer size (buffer size, BS) included in the UL BSR MAC CE. It should be understood that the to-be-transmitted data may be understood as valid data. Optionally, the priority corresponding to the UL BSR MAC CE is a priority determined during UL MAC PDU packet assembly, or the priority corresponding to the UL BSR MAC CE is a priority determined during UL MAC PDU transmission. Optionally, the logical channel for triggering the UL BSR is a logical channel meeting an LCP restriction of a UL-SCH resource associated with the UL BSR MAC CE, and the logical channel on which the to-be-transmitted data exists on the uplink is a logical channel meeting the LCP restriction of the UL-SCH resource associated with the UL BSR MAC CE.

The priority corresponding to the UL SR in the foregoing conditions may be a priority of a logical channel for triggering the UL SR. Optionally, the priority corresponding to the UL SR may be a highest priority of a logical channel for triggering the UL SR. Optionally, the logical channel for triggering the UL SR is a logical channel that can be associated with a PUCCH resource corresponding to the UL SR.

The priority of the SL BSR MAC CE in the foregoing conditions may be a priority of a sidelink logical channel for triggering a sidelink buffer status report SL BSR, a priority of a sidelink logical channel on which to-be-transmitted data exists on a sidelink, or a priority of a sidelink logical channel associated with a buffer size BS included in the SL BSR MAC CE. Optionally, the priority of the SL BSR MAC CE may be a highest priority of a sidelink logical channel for triggering a sidelink buffer status report SL BSR, a highest priority of a sidelink logical channel on which to-be-transmitted data exists on a sidelink, or a highest priority of a sidelink logical channel associated with a buffer size BS included in the SL BSR MAC CE. It should be understood that the to-be-transmitted data may be understood as valid data. Optionally, the priority corresponding to the SL BSR MAC CE is a priority determined during UL MAC PDU packet assembly, or the priority corresponding to the SL BSR MAC CE is a priority determined during UL MAC PDU transmission. Optionally, the sidelink logical channel for triggering the SL BSR is a logical channel meeting an LCP restriction of a UL-SCH resource associated with the SL BSR MAC CE, and the logical channel on which the to-be-transmitted data exists on the sidelink is a logical channel meeting the LCP restriction of the SL-SCH resource associated with the SL MAC PDU.

The priority corresponding to the SL SR in the foregoing conditions may be a priority of a sidelink logical channel for triggering the SL SR. Optionally, the priority corresponding to the SL SR may be a highest priority of a sidelink logical channel for triggering the SL SR. Optionally, the sidelink logical channel for triggering the SL SR is a sidelink logical channel that can be associated with a PUCCH resource corresponding to the SL SR.

The foregoing conditions relate to a non-padding UL BSR MAC CE corresponding to a specified logical channel, a non-padding SL BSR MAC CE corresponding to a specified sidelink logical channel, a non-padding UL BSR MAC CE corresponding to a specified service, and a non-padding SL BSR MAC CE corresponding to a specified service. The specified logical channel or the specified sidelink logical channel may be determined by using a logical channel priority or a sidelink logical channel priority. For example, it is specified that logical channel priorities are 0, 1, and 2. When a highest priority of a corresponding logical channel for triggering the non-padding UL BSR belongs to the list range of 0, 1, and 2, when a logical channel on which to-be-transmitted data exists on a current uplink belongs to the list range of 0, 1, and 2, or when a priority of a logical channel associated with the buffer size BS included in the UL BSR MAC CE belongs to the list range of 0, 1, and 2, the UL BSR MAC CE belongs to a non-padding UL MAC CE corresponding to the specified logical channel.

The priority corresponding to the UL ACK/NACK feedback in the foregoing conditions may be a priority of a logical channel included in a downlink medium access protocol data unit (downlink medium access protocol data unit, DL MAC PDU) or a transport block (transport block, TB) associated with the UL ACK/NACK feedback. Optionally, the priority corresponding to the UL ACK/NACK feedback may be a highest priority of a logical channel included in the DL MAC PDU or the TB associated with the UL ACK/NACK feedback.

The priority corresponding to the SL ACK/NACK feedback in the foregoing conditions may be a priority of a sidelink logical channel included in an SL MAC PDU or a TB associated with the SL ACK/NACK feedback. Optionally, the priority corresponding to the SL ACK/NACK feedback may be a highest priority of a sidelink logical channel included in the SL MAC PDU or the TB associated with the SL ACK/NACK feedback.

The priority of the MAC CE included in the UL MAC PDU in the foregoing conditions may be a logical channel priority configured for the network device, or a highest priority of a logical channel on which valid data exists and that meets LCP restrictions of a UL-SCH resource.

The priority corresponding to the configured grant MAC CE in the foregoing conditions may be a priority of a logical channel or a priority of a sidelink logical channel associated with a grant corresponding to the configured grant MAC CE. Optionally, the priority corresponding to the configured grant MAC CE may be a highest priority of a logical channel or a highest priority of a sidelink logical channel associated with a grant corresponding to the configured grant MAC CE.

It should be understood that the MAC CE and the logical channel that are included in the UL MAC PDU in the foregoing conditions may further include a case in which packet assembly has not been completed for the UL MAC PDU. For example, the MAC CE and the logical channel that are included in the UL MAC PDU may alternatively be replaced with a MAC CE and a logical channel that can meet the LCP restrictions of the UL-SCH resource. It should be understood that the priority of the sidelink logical channel in this embodiment of this application may alternatively be a priority (or a priority level) of a PC5 fifth generation quality of service identifier (PC5 5G quality of service identifier, PQI). Optionally, when one sidelink logical channel is associated with a plurality of PQIs, a priority of the sidelink logical channel may be a priority of a PQI with the highest priority. Therefore, the highest priority of the sidelink logical channel included in the SL MAC PDU may further be understood as the highest PQI priority of the PQI included in the SL MAC PDU.

It should be understood that the sidelink logical channel included in the SL MAC PDU in the foregoing conditions may further include a case in which packet assembly has not been completed for the SL MAC PDU. For example, the sidelink logical channel included in the UL MAC PDU may alternatively be replaced with a sidelink logical channel that can meet the LCP restrictions of the SL-SCH resource.

As can be learned from the foregoing content, there may be a to-be-sent UL BSR MAC CE and a to-be-sent UL SR on the uplink, and there may be a to-be-sent SL BSR MAC CE and a to-be-sent SL SR on the uplink, but representation manners for priorities corresponding to the UL BSR MAC CE and the UL SR are different from those for priorities corresponding to the SL BSR MAC CE and the SL SR.

For example, the priority corresponding to the UL BSR MAC CE and the priority corresponding to the UL SR may be represented by using priorities of logical channels. To be specific, the priority corresponding to the UL BSR MAC CE may be a highest priority of a logical channel for triggering a UL BSR, a highest priority of a logical channel on which to-be-transmitted data exists on the uplink, or a priority of a logical channel associated with a buffer size BS included in the UL BSR MAC CE. The priority corresponding to the UL SR may be a highest priority of a logical channel for triggering the UL SR. The priority corresponding to the SL BSR MAC CE and the priority corresponding to the SL SR may be represented by using priorities of sidelink logical channels. That is, the priority corresponding to the SL BSR MAC CE may be a highest priority of a sidelink logical channel for triggering an SL BSR, a highest priority of a sidelink logical channel on which to-be-transmitted data exists on a sidelink, or a priority of a logical channel associated with a buffer size BS included in the UL BSR MAC CE. The priority corresponding to the SL SR may be a highest priority of a sidelink logical channel for triggering the SL SR.

Generally, the highest priority of the logical channel included in the UL MAC PDU, the priority corresponding to the UL BSR MAC CE, the priority corresponding to the UL SR, the priority of the MAC CE included in the UL MAC PDU, and the priority corresponding to the UL ACK/NACK feedback that are mentioned in the first condition in this embodiment of this application all may be represented by using priorities of logical channels. The priority corresponding to the SL BSR MAC CE, the priority corresponding to the SL SR, and the priority corresponding to the SL ACK/NACK feedback that are mentioned in the second condition and the third condition in this embodiment of this application all may be represented by using priorities of sidelink logical channels.

A representation manner for a priority of a logical channel is different from that for a priority of a sidelink logical channel. Therefore, in this embodiment of this application, when a priority of a to-be-transmitted service on the uplink is being determined, the priority of the logical channel and the priority of the sidelink logical channel are separately considered.

In a possible design, the terminal device may compare the priority corresponding to the UL BSR MAC CE, the priority corresponding to the UL SR, and the like that may be represented by using priorities represented by logical channel priorities with the first threshold, and may compare the priority corresponding to the SL BSR MAC CE, the priority corresponding to the SL SR, and the like that may be represented by using priorities represented by sidelink logical channel priorities with the second threshold. For example, when the priority corresponding to the UL BSR MAC CE is higher than or equal to the priority indicated by the first threshold, it may be considered that the priority corresponding to the UL BSR MAC CE is higher, that is, the priority of the to-be-transmitted service on the uplink is higher, and the uplink transmission needs to be performed preferably. When the priority corresponding to the UL SR is higher than or equal to the priority indicated by the first threshold, it may be considered that the priority corresponding to the UL SR is higher, that is, the priority of the to-be-transmitted service on the uplink is higher, and the uplink transmission needs to be performed preferably. For another example, when the priority corresponding to the SL BSR MAC CE is higher than or equal to the priority indicated by the second threshold, it may be considered that the priority corresponding to the SL BSR MAC CE is higher, that is, the priority of the to-be-transmitted service on the uplink is higher, and the uplink transmission needs to be performed preferably. When the priority corresponding to the SL SR is higher than or equal to the priority indicated by the second threshold, it may be considered that the priority corresponding to the SL SR is higher, that is, the priority of the to-be-transmitted service on the uplink is higher, and the uplink transmission needs to be performed preferably.

In this way, two thresholds used for priority comparison are set, and are respectively used for a service triggered by an uplink logical channel and a service triggered by a sidelink logical channel, where the services are transmitted on the uplink, so that the priority of the to-be-transmitted service on the uplink can be measured more accurately, thereby effectively ensuring transmission performance of the to-be-transmitted service on the uplink.

In another possible design, the terminal device may compare the priority corresponding to the UL BSR MAC CE, the priority corresponding to the UL SR, and the like that may be represented by using priorities represented by logical channel priorities with the first threshold, and compare the priority corresponding to the SL BSR MAC CE, the priority corresponding to the SL SR, and the like that may be represented by using priorities represented by sidelink logical channel priorities with the highest priority of the sidelink logical channel included in the SL MAC PDU. For example, when the priority corresponding to the SL BSR MAC CE is higher than or equal to the highest priority of the sidelink logical channel included in the SL MAC PDU, it may be considered that the priority corresponding to the SL BSR MAC CE is higher, that is, the priority of the to-be-transmitted service on the uplink is higher, and the uplink transmission needs to be performed preferably.

In this embodiment of this application, the first threshold and the second threshold may be represented by using values. In addition, a priority of a logical channel may also be represented by using a value, and a smaller value may indicate a higher corresponding priority. Therefore, as can be learned with reference to the first condition described above, that the highest priority of the logical channel included in the UL MAC PDU is higher than the priority indicated by the first threshold may further be understood as that a value of the highest priority of the logical channel included in the UL MAC PDU is less than the first threshold. That the priority corresponding to the UL BSR MAC CE is higher than the priority indicated by the first threshold may further be understood as that a value of the priority corresponding to the UL BSR MAC CE is less than the first threshold.

Similarly, a priority of a sidelink logical channel may also be represented by using a value, and a smaller value may indicate a higher corresponding priority. Therefore, as can be learned with reference to the second condition described above, that the priority corresponding to the SL BSR MAC CE is higher than the priority indicated by the second threshold may further be understood as that a value of the priority corresponding to the SL BSR MAC CE is less than the second threshold. That the priority corresponding to the SL SR is higher than the priority indicated by the second threshold may further be understood as that a value of the priority corresponding to the SL SR is less than the second threshold.

Alternatively, in another possible design, the first threshold and the second threshold may be represented in a form of priority lists. To be specific, the first threshold may correspond to a priority list of logical channels, and the priority list includes all logical channel priorities higher than the priority indicated by the first threshold. Therefore, determining whether a priority is greater than the priority indicated by the first threshold may be determining whether the priority is in the priority list of the logical channels that corresponds to the first threshold.

Similarly, the second threshold may correspond to a priority list of sidelink logical channels, and the priority list includes all sidelink logical channel priorities higher than the priority indicated by the second threshold. Therefore, determining whether a priority is greater than the priority indicated by the second threshold may be determining whether the priority is in the priority list of the sidelink logical channels that corresponds to the second threshold.

It should be noted that the first threshold and the second threshold in this embodiment of this application may be predefined in a protocol, or may be configured by the network device for the terminal device. The "predefinition" may be understood as defining, defining in advance, storing, pre-storing, pre-negotiating, pre-configuring, curing, or pre-programing. The configuration performed by the network device for the terminal device may be understood as pre-configuration, or that the network device sends the first threshold and the second threshold to the terminal device in a plurality of manners such as by using higher layer signaling (for example, RRC signaling, MAC signaling, or physical layer signaling), downlink control information (downlink control information, DCI), and system broadcast message. Optionally, sending manners for the first threshold and the second threshold may be the same, or may be different. The first threshold and the second threshold may be sent in a same message, or may be sent in different messages. This is not limited in this application.

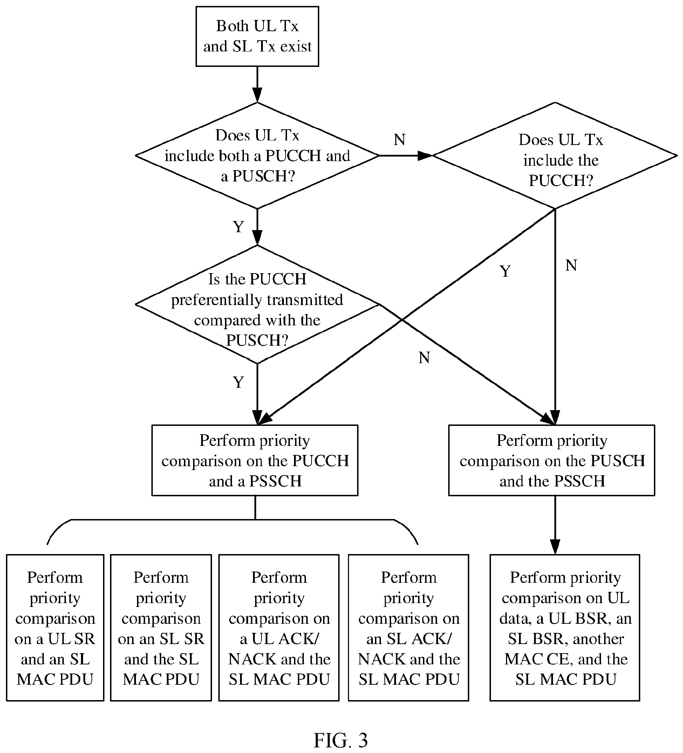

FIG. 3 shows a specific example of a communication method according to an embodiment of this application. As described above, on the uplink, the terminal device may send the UL MAC PDU on the PUSCH, or may send information such as the SR, the CSI, and the ACK/NACK on the PUCCH. In a specific application scenario, the terminal device may simultaneously send the PUSCH and the PUCCH, or may send only the PUSCH or only the PUCCH. Therefore, depending on whether the PUSCH or the PUCCH is actually sent on the uplink and content actually carried on the PUSCH or the PUCCH, there may be five priority comparison scenarios shown in FIG. 3. It may be understood that the terminal device may select different sub conditions for different priority comparison scenarios shown in FIG. 3 when determining whether each condition in a condition set is met.

**Embodiment 2**

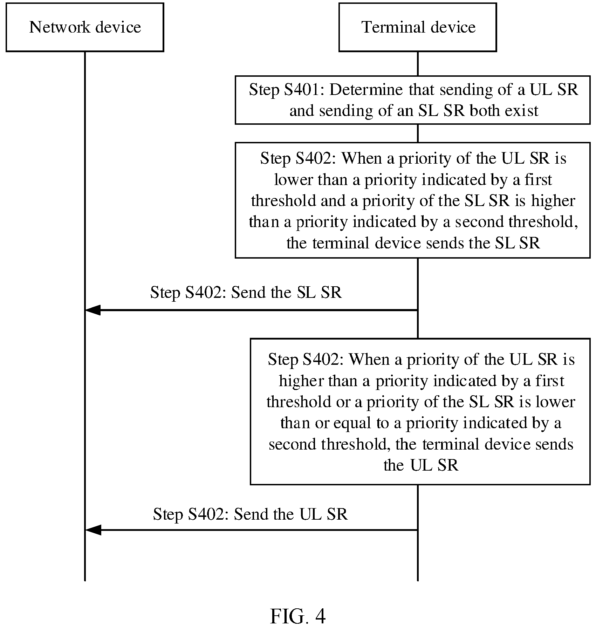

FIG. 4 is a schematic flowchart of a communication method according to an embodiment of this application. The method specifically includes the following step S401 and step S402:

Step S401: A terminal device determines that sending of an uplink scheduling request UL SR and sending of a sidelink scheduling request SL SR both exist.

The UL SR and the SL SR are both sent on a PUCCH on an uplink. The UL SR is a scheduling request triggered by an uplink logical channel. The SL SR is a scheduling request triggered by a sidelink logical channel.

In step S401, the terminal device may determine that the sending of the UL SR and the sending of the SL SR both exist. That the sending of the UL SR and the sending of the SL SR both exist may be that a time domain resource occupied by the UL SR and a time domain resource occupied by the SL SR partially overlap or completely overlap.

In a possible design, not only the sending of the UL SR and the sending of the SL SR both exist, but also the sending of the UL SR conflicts with the sending of the SL SR. Because the UL SR and the SL SR are both sent on the uplink, the sending conflict is a conflict between PUCCH transmission resources in a Uu interface. Specifically, a scenario in which the sending of the UL SR conflicts with the sending of the SL SR may be that the time domain resource used by the sending of the UL SR and the time domain resource used by the sending of the SL SR partially overlap or completely overlap, and the sending of the UL SR and the sending of the SL SR share/use a same carrier. Alternatively, a scenario in which the sending of the UL SR conflicts with the sending of the SL SR may be that the time domain resource used by the sending of the UL SR and the time domain resource used by the sending of the SL SR partially or completely overlap, and the sending of the UL SR and the sending of the SL SR use different carriers, but share/use a same transmit chain Tx chain and power budget power budget.

Step S402: When a priority corresponding to the UL SR is lower than or equal to a priority indicated by a first threshold and a priority corresponding to the SL SR is higher than a priority indicated by a second threshold, the terminal device sends the SL SR; or when a priority corresponding to the UL SR is higher than a priority indicated by a first threshold or a priority corresponding to the SL SR is lower than or equal to a priority indicated by a second threshold, the terminal device sends the UL SR.

Step S402 may also be understood as that when the priority corresponding to the UL SR is higher than the priority indicated by the first threshold or the priority corresponding to the SL SR is lower than or equal to the priority indicated by the second threshold, the terminal device preferably sends the UL SR; or when the priority corresponding to the UL SR is lower than or equal to the priority indicated by the first threshold and the priority corresponding to the SL SR is higher than the priority indicated by the second threshold, the terminal device preferably sends the SL SR.

In this embodiment of this application, that the terminal device preferably sends the UL SR means that the terminal device sends only the UL SR and does not send the SL SR; the terminal device simultaneously sends the UL SR and the SL SR, but reduces a transmit power of the SL SR; or the terminal device first sends the UL SR, and then sends the SL SR. Similarly, that the terminal device preferably sends the SL SR means that the terminal device sends only the SL SR

EP 4 030 838 B1

and does not send the UL SR; the terminal device simultaneously sends the UL SR and the SL SR, but reduces a transmit power of the UL SR; or the terminal device first sends the SL SR, and then sends the UL SR.

It should be noted that in this embodiment of this application, the priority corresponding to the UL SR is a priority of a logical channel for triggering the UL SR. Optionally, the priority corresponding to the UL SR may be a highest priority of a logical channel for triggering the UL SR. Optionally, the logical channel for triggering the UL SR is a logical channel that can be associated with a PUCCH resource corresponding to the UL SR. The priority corresponding to the SL SR is a priority of a sidelink logical channel that can trigger the SL SR. Optionally, the priority corresponding to the SL SR is a highest priority of a sidelink logical channel that can trigger the SL SR. Optionally, the sidelink logical channel for triggering the SL SR is a sidelink logical channel that can be associated with a PUCCH resource corresponding to the SL SR. The priority of the sidelink logical channel may alternatively be a priority (or a priority level) of a PQI.

The first threshold and the second threshold may be represented by using values, or may be represented by using a logical channel priority list or a sidelink logical channel priority list. In addition, the first threshold and the second threshold may be predefined in a protocol, or may be configured by a network device. For specific implementations of the first threshold and the second threshold, refer to the descriptions in step S202. Details are not described herein again.

It should be understood that the technical solution provided in step S402 may be applied to a scenario in which the sending of the UL SR and the sending of the SL SR both exist, and may also be applied to a scenario in which the sending of the UL SR and the sending of the SL SR both exist and the sending of the UL SR conflicts with the sending of the SL SR. In the two scenarios, the terminal device may directly compare the priority corresponding to the UL SR with the priority corresponding to the SL SR to determine whether to preferably send the UL SR or the SL SR. However, this requires the terminal device to pre-configure a mapping relationship between a priority of a logical channel and a priority of a sidelink logical channel.

It should further be understood that in this embodiment of this application, when sending of a UL ACK/NACK and sending of an SL ACK/NACK both exist on the uplink, how to perform sending may be determined in a manner similar to that in step S402.

For example, when the sending of the SL ACK/NACK and the sending of the UL ACK/NACK both exist, if a priority corresponding to the UL ACK/NACK is lower than or equal to the priority indicated by the first threshold and a priority corresponding to the SL ACK/NACK is higher than the priority indicated by the second threshold, the terminal device sends the SL ACK/NACK; or if a priority corresponding to the UL ACK/NACK is higher than the priority indicated by the first threshold or a priority corresponding to the SL ACK/NACK is lower than or equal to the priority indicated by the second threshold, the terminal device sends the UL ACK/NACK.

The priority corresponding to the UL ACK/NACK feedback may be a priority of a logical channel included in a downlink medium access protocol data unit (downlink medium access protocol data unit, DL MAC PDU) or a transport block (transport block, TB) associated with the UL ACK/NACK feedback. Optionally, the priority corresponding to the UL ACK/NACK feedback may be a highest priority of a logical channel included in the DL MAC PDU or the TB associated with the UL ACK/NACK feedback.

The priority corresponding to the SL ACK/NACK feedback may be a highest priority of a sidelink logical channel included in the SL MAC PDU or the TB associated with the SL ACK/NACK feedback. Optionally, the priority corresponding to the SL ACK/NACK feedback may be a highest priority of a sidelink logical channel included in the SL MAC PDU or the TB associated with the SL ACK/NACK feedback.

The first threshold and the second threshold may be represented by using values, or may be represented by using a logical channel priority list or a sidelink logical channel priority list. In addition, the first threshold and the second threshold may be predefined in a protocol, or may be configured by a network device. For specific implementations of the first threshold and the second threshold, refer to the descriptions in step S202. Details are not described herein again.

It should be understood that the technical solution provided above may be applied to a scenario in which the sending of the UL ACK/NACK and the sending of the SL ACK/NACK both exist, and may also be applied to a scenario in which the sending of the UL ACK/NACK and the sending of the SL ACK/NACK both exist and the sending of the UL ACK/NACK conflicts with the sending of the SL ACK/NACK. In the two scenarios, the terminal device may directly compare the priority corresponding to the UL ACK/NACK with the priority corresponding to the SL ACK/NACK to determine whether to preferably send the UL ACK/NACK or the SL ACK/NACK. However, this requires the terminal device to pre-configure a mapping relationship between a priority of a logical channel and a priority of a sidelink logical channel.

## Embodiment 3

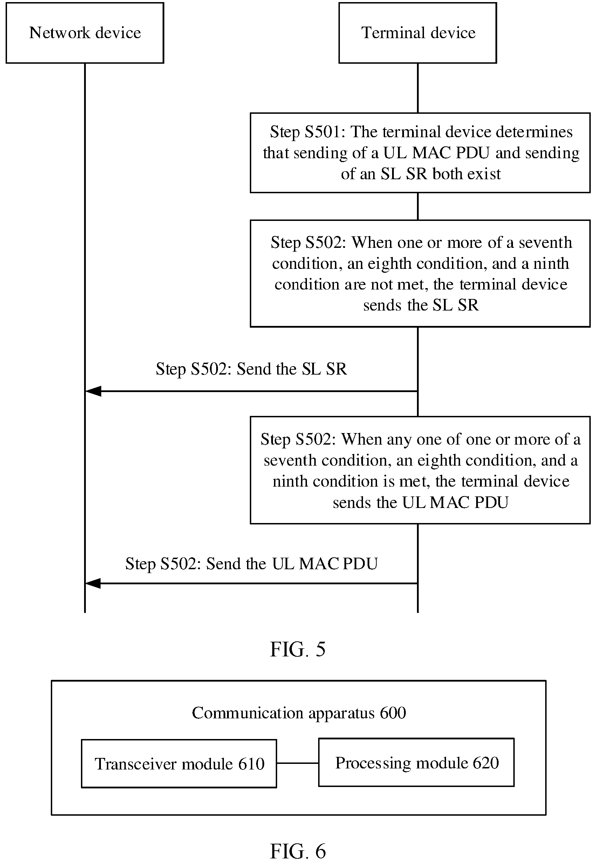

FIG. 5 is a schematic flowchart of a communication method according to an embodiment of this application. The method specifically includes the following step S501 and step S502:
Step S501: A terminal device determines that sending of a UL MAC PDU and sending of an SL SR both exist.

The UL MAC PDU is sent on a PUSCH on an uplink. The SL SR is sent on a PUCCH on the uplink. The UL MAC PDU may include a UL MAC CE and a UL MAC SDU. The UL MAC CE may include a UL BSR MAC CE, an SL BSR MAC CE, and various other types of MAC CEs. The SL SR is a scheduling request triggered by a sidelink logical channel.

In step S501, the terminal device may determine that the sending of the UL MAC PDU and the sending of the SL SR both exist. That the sending of the UL MAC PDU and the sending of the SL SR both exist may be that a time domain resource occupied by the UL MAC PDU and a time domain resource occupied by the SL SR partially overlap or completely overlap.

In a possible design, not only the sending of the UL MAC PDU and the sending of the SL SR both exist, but also the sending of the UL MAC PDU conflicts with the sending of the SL SR. Because the UL MAC PDU and the SL SR are both sent on the uplink, the sending conflict is a conflict between sending of the PUSCH and the PUCCH in a Uu interface. Specifically, a scenario in which the sending of the UL MAC PDU conflicts with the sending of the SL SR may be that the time domain resource used by the sending of the UL MAC PDU and the time domain resource used by the sending of the SL SR partially overlap or completely overlap, and the sending of the UL MAC PDU and the sending of the SL SR share/use a same carrier. Alternatively, a scenario in which the sending of the UL MAC PDU conflicts with the sending of the SL SR may be that the time domain resource used by the sending of the UL MAC PDU and the time domain resource used by the sending of the SL SR partially or completely overlap, and the sending of the UL MAC PDU and the sending of the SL SR use different carriers, but share/use a same transmit chain Tx chain and power budget power budget.

Step S502: When one or more of a seventh condition, an eighth condition, and a ninth condition are not met, the terminal device sends the SL SR; or when any one of one or more of a seventh condition, an eighth condition, and a ninth condition is met, the terminal device sends the UL MAC PDU.

The step S502 may alternatively be understood as that when one or more of the seventh condition, the eighth condition, and the ninth condition are not met, the terminal device preferably sends the SL SR; or when any one of one or more of the seventh condition, the eighth condition, and the ninth condition is met, the terminal device preferably sends the UL MAC PDU.

In this embodiment of this application, that the terminal device preferably sends the UL MAC PDU means that the terminal device sends only the UL MAC PDU and does not send the SL SR; the terminal device simultaneously sends the UL MAC PDU and the SL SR, but reduces a transmit power of the SL SR; or the terminal device first sends the UL MAC PDU, and then sends the SL SR. Similarly, that the terminal device preferably sends the SL SR means that the terminal device sends only the SL SR and does not send the UL MAC PDU; the terminal device simultaneously sends the UL MAC PDU and the SL SR, but reduces a transmit power of the UL MAC PDU; or the terminal device first sends the SL SR, and then sends the UL MAC PDU.

Specifically, the seventh condition may include one or more of the following sub conditions:

(1) A highest priority of a logical channel included in an uplink medium access control protocol data unit (uplink medium access control protocol data unit, UL MAC PDU) sent on the uplink is higher than a priority indicated by a first threshold.
(2) A priority corresponding to an uplink buffer status report medium access control control element (uplink buffer status report medium access control control element, UL BSR MAC CE) included in the UL MAC PDU is higher than the priority indicated by the first threshold.
(3) A priority corresponding to a sidelink buffer status report medium access control control element (sidelink buffer status report medium access control control element, SL BSR MAC CE) included in the UL MAC PDU is higher than a priority indicated by a second threshold.
(4) The priority corresponding to the SL BSR MAC CE included in the UL MAC PDU is higher than a priority corresponding to the SL SR.
(5) A priority corresponding to a configured grant confirmation medium access control control element (configured grant confirmation MAC CE) included in the UL MAC PDU is higher than the priority indicated by the first threshold.
(6) A priority of a medium access control control element (medium access control control element, MAC CE) included in the UL MAC PDU is higher than the priority indicated by the first threshold.

The eighth condition is that the priority corresponding to the SL SR is lower than or equal to the priority indicated by the second threshold.

The ninth condition may include: the UL MAC PDU includes one or more MAC CEs specified or configured as follows:

a cell radio network temporary identity C-RNTI MAC CE, a configured grant confirmation MAC CE, a non-padding uplink buffer status report non-padding UL BSR MAC CE, a non-padding sidelink buffer status report non-padding SL BSR MAC CE, a power headroom report PHR MAC CE, a non-padding UL BSR MAC CE corresponding to a specified logical channel, a non-padding SL BSR MAC CE corresponding to a specified sidelink logical channel, a non-padding UL BSR MAC CE corresponding to a specified service, and a non-padding SL BSR MAC CE corresponding to a specified service.

It should be noted that in this embodiment of this application, the first condition may include one or more sub conditions. When the seventh condition includes a plurality of sub conditions, if any one or more of sub conditions in the condition are met, it may be considered that the condition is met.

Optionally, the terminal device may determine, in a preset order, whether each condition in a condition set is met. For example, the terminal device may sequentially perform determining in an order of the ninth condition, the seventh condition, and the eighth condition.

For priorities corresponding to various information transmitted by the terminal device on the uplink in the foregoing conditions, refer to the descriptions in step S202.

The first threshold and the second threshold may be represented by using values, or may be represented by using a logical channel priority list or a sidelink logical channel priority list. In addition, the first threshold and the second threshold may be predefined in a protocol, or may be configured by a network device. For specific implementations of the first threshold and the second threshold, refer to the descriptions in step S202. Details are not described herein again.

It should be understood that the technical solution provided in step S502 may be applied to a scenario in which the sending of the UL MAC PDU and the sending of the SL SR both exist, and may also be applied to a scenario in which the sending of the UL MAC PDU and the sending of the SL SR both exist and the sending of the UL MAC PDU conflicts with the sending of the SL SR. In the two scenarios, the terminal device may directly compare the priority corresponding to the UL MAC PDU with the priority corresponding to the SL SR to determine whether to preferably send the UL MAC PDU or the SL SR. However, this requires the terminal device to pre-configure a mapping relationship between a priority of a logical channel and a priority of a sidelink logical channel.

It should further be understood that in this embodiment of this application, there may be another sending scenario between the PUSCH and the PUCCH on the uplink. For example, sending of an SL ACK/NACK conflicts with sending of a UL MAC PDU. In these conflict scenarios, how to perform sending may be determined in a manner similar to that in step S502.

For example, when the sending of the SL ACK/NACK and the sending of the UL MAC PDU both exist, if one or more of a tenth condition, an eleventh condition, and a twelfth condition are not met, the terminal device sends the SL ACK/NACK; or if any one of one or more of a tenth condition, an eleventh condition, and a twelfth condition is met, the terminal device sends the UL MAC PDU.

For example, the tenth condition may include one or more of the following sub conditions:

(1) A highest priority of a logical channel included in an uplink medium access control protocol data unit (uplink medium access control protocol data unit, UL MAC PDU) sent on the uplink is higher than a priority indicated by a first threshold.
(2) A priority corresponding to an uplink buffer status report medium access control control element (uplink buffer status report medium access control control element, UL BSR MAC CE) included in the UL MAC PDU is higher than the priority indicated by the first threshold.
(3) A priority corresponding to a sidelink buffer status report medium access control control element (sidelink buffer status report medium access control control element, SL BSR MAC CE) included in the UL MAC PDU is higher than a priority indicated by a second threshold.
(4) The priority corresponding to the SL BSR MAC CE included in the UL MAC PDU is higher than a priority corresponding to the SL ACK/NACK.
(5) A priority corresponding to a configured grant confirmation medium access control control element (configured grant confirmation MAC CE) included in the UL MAC PDU is higher than the priority indicated by the first threshold.
(6) A priority of a medium access control control element (medium access control control element, MAC CE) included in the UL MAC PDU is higher than the priority indicated by the first threshold.

The eleventh condition is that the priority corresponding to the SL ACK/NACK is lower than or equal to the priority indicated by the second threshold.

The twelfth condition may include: the UL MAC PDU includes one or more MAC CEs specified or configured as follows:

a cell radio network temporary identity C-RNTI MAC CE, a configured grant confirmation MAC CE, a non-padding uplink buffer status report non-padding UL BSR MAC CE, a non-padding sidelink buffer status report non-padding SL BSR MAC CE, a power headroom report PHR MAC CE, a non-padding UL BSR MAC CE corresponding to a specified logical channel, a non-padding SL BSR MAC CE corresponding to a specified sidelink logical channel, a non-padding UL BSR MAC CE corresponding to a specified service, and a non-padding SL BSR MAC CE corresponding to a specified service.

It should be noted that in this embodiment of this application, the tenth condition may include one or more sub conditions. When the tenth condition includes a plurality of sub conditions, if any one or more of sub conditions in the condition are met, it may be considered that the condition is met.

Optionally, the terminal device may determine, in a preset order, whether each condition in a condition set is met. For example, the terminal device may sequentially perform determining in an order of the twelfth condition, the tenth condition, and the eleventh condition.

For priorities corresponding to various information transmitted by the terminal device on the uplink in the foregoing conditions, refer to the descriptions in step S202.

**Embodiment 4**

In a current technology, a mapping relationship between a QoS parameter and a sidelink radio bearer SLRB and an SLRB configuration may be included in a system information block (system information block, SIB) message of a network device. However, the SIB message has a limited size, and cannot include all QoS parameter combinations, and even cannot include a guaranteed flow bit rate (guaranteed flow bit rate, GFBR) and a maximum flow bit rate (maximum flow bit rate, MFBR) parameter that correspond to a guaranteed flow bit rate GBR service. If a terminal device continues to perform communication on a sidelink by using a SIB configuration, QoS requirements of some service transmission on the sidelink may not be met.

In view of this, this application further provides a communication method for establishing or restoring a radio resource control (radio resource control, RRC) connection.

When one or more of the following conditions (1) to (9) are met, the terminal device initiates to establish an RRC connection or restore an RRC connection to the network device:

(1) A previous layer of the terminal device initiates sidelink transmission of a PC5 QoS flow with a resource type of a GBR.

(2) The previous layer of the terminal device initiates sidelink transmission of a PC5 QoS flow associated with a GFBR parameter.

(3) The previous layer of the terminal device initiates sidelink transmission of a PC5 QoS flow associated with an MFBR parameter.

(4) The previous layer of the terminal device initiates sidelink transmission of a PC5 QoS flow associated with a range parameter.

(4) The previous layer of the terminal device initiates sidelink transmission of a PC5 QoS flow associated with a non-standard PC5 fifth generation quality of service identifier (PC5 5G quality of service identifier, PQI) parameter.

(5) The previous layer of the terminal device initiates sidelink transmission of a PC5 QoS flow, and a PC5 QoS parameter associated with the PC5 QoS flow is not included in PC5 QoS parameter list information or PC5 QoS parameter range information in a SIB.

In the foregoing conditions, being associated with the non-standard PC5 fifth generation quality of service identifier (PC5 5G quality of service identifier, PQI) parameter may alternatively be understood as being associated with one or more of a specific resource type (a GBR, a Delay critical GBR or a Non-GBR), a priority level priority level, a packet delay budget (Packet Delay Budget, PDB), a packet error rate (Packet Error Rate, PER), an averaging window (for GBR and Delay-critical GBR resource type only), and a maximum data burst volume (for Delay-critical GBR resource type only) parameter.

In the foregoing conditions, the PC5 QoS parameter includes one or more of a PC5 quality of service flow identifier (PC5 QoS flow identifier, PFI), a PC5 fifth generation quality of service identifier (PC5 5G quality of service identifier, PQI), a guaranteed flow bit rate (guaranteed flow bit rate, GFBR), a maximum flow bit rate (maximum flow bit rate, MFBR), a minimum required communication range (minimum required communication range), an allocation reservation priority ARP, a PC5 link aggregate maximum bit rate PC5 LINK-AMBR, default values default values, a resource type resource type (a GBR, a Delay critical GBR, or a Non-GBR), a priority level priority level, a packet delay budget (Packet Delay Budget, PDB), a packet error rate (Packet Error Rate, PER), an averaging window averaging window (for GBR and Delay-critical GBR resource type only), and a maximum data burst volume maximum data burst volume (for Delay-critical GBR resource type only).

It should be understood that the initiation performed by the previous layer of the terminal device may alternatively be understood as that the previous layer of the terminal device performs initiation on an access layer of the terminal device. For example, the previous layer of the terminal device includes a vehicle to everything V2X layer and an application layer APP layer; and the access layer of the terminal device includes an RRC layer, an SDAP layer, a PDCP layer, an RLC layer, a MAC layer, and a PHY layer.

**Embodiment 5**

In a current technology, in some scenarios, for example, when a terminal device detects a radio link failure (Radio link failure, RLF) on an interface between the terminal device and a network device, the terminal device needs to contend with another terminal device for a resource in an exceptional pool (exceptional pool) to perform sidelink transmission. As a result, the terminal device may not be capable of obtaining any resource, affecting service continuity.

In view of this, this application further provides a communication method. When the terminal device detects that an RLF occurs, or when the terminal device detects that a beam failure occurs on an interface between the terminal device and the network device, or in a process in which the terminal device detects a beam failure on an interface between the terminal device and the network device, or when the terminal device detects that a physical layer link problem occurs on an interface between the terminal device and the network device, or when the terminal device is synchronized to a global navigation satellite system (global navigation satellite system, GNSS), if the terminal device has been configured with a configured grant (configured grant), the terminal device performs the sidelink transmission by using the configured grant. Optionally, in addition to the configured grant, the terminal device may further continue to use one or more of a configured sidelink radio bearer SLRB configuration, a transmit resource pool Tx resource pool, a receive resource pool Rx resource pool, an exceptional pool exceptional pool, a synchronization configuration, and a physical layer parameter configuration.

Optionally, if no configured grant is configured for the terminal device, sidelink transmission is performed by using an exceptional pool (exceptional pool).

Optionally, the configured grant includes a configured grant type 1 and a configured grant type 2. The configured grant type 1 can be directly used. The configured grant type 2 can be used after being activated by using downlink control information (downlink control information, DCI).

The terminal device stops using the configured grant when one or more of the following conditions are met: Optionally, the conditions further include stopping using a sidelink radio bearer SLRB configuration, a transmit resource pool Tx resource pool, a receive resource pool Rx resource pool, an exceptional pool exceptional pool, a synchronization configuration, a physical layer parameter configuration.

(1) when cell selection or cell re-selection is triggered;
(2) when cell selection or cell re-selection is completed (when a cell is camped on);
(3) when an RRC reestablishment request (RRC Reestablishment Request) message is sent;
(4) when an RRC reestablishment response message or an RRC establishment response message is received; and
(5) when an RRC reestablishment complete message or an RRC setup complete (RRC Reestablishment Complete or RRC Setup Complete) message.

## Embodiment 6

In a current technology, in a logical channel prioritization (Logical Channel Prioritization, LCP) process performed by a terminal device, a priority of a non-padding uplink buffer status report medium access control control element non-padding UL BSR MAC CE (MAC control element for BSR, with exception of BSR included for padding) is always higher than that of a non-padding sidelink buffer status report medium access control control element non-padding SL BSR MAC CE (MAC control element for Sidelink BSR, with exception of Sidelink BSR included for padding). The non-padding UL BSR may be triggered by an enhanced mobile broadband (enhanced mobile broadband, eMBB) service with a low priority. The non-padding SL BSR may be triggered by an ultra-reliable low-latency communication (ultra-reliable low-latency communication, URLLC) service with a high priority. However, in a conventional technology, the priority of the non-padding UL BSR MAC CE in the LCP is definitely higher than that of the non-padding SL BSR MAC CE. If an uplink resource is not large enough, the non-padding SL BSR MAC CE cannot be included in a current UL MAC PDU for sending to a network device. Consequently, a sidelink transmission resource cannot be obtained in time, further affecting URLLC service transmission on a sidelink.

In view of this, this application further provides a communication method.

The terminal device determines relative priorities of the non-padding UL BSR MAC CE and the non-padding SL BSR MAC CE in the LCP process.

When the priority corresponding to the non-padding UL BSR MAC CE is not higher than a priority indicated by a first threshold or is not in a first priority list and the priority corresponding to the non-padding SL BSR MAC CE is higher than a priority indicated by a second threshold or is in a second priority list, the terminal device determines that the priority of the non-padding SL BSR MAC CE in the LCP process is higher than that of the non-padding UL BSR MAC CE; or otherwise, the terminal device determines that the priority of the non-padding UL BSR MAC CE in the LCP process is higher than that of the non-padding SL BSR MAC CE.

Optionally, the priority corresponding to the non-padding UL BSR MAC CE is a highest priority of an uplink logical channel for triggering a UL BSR. A priority corresponding to the non-padding SL BSR MAC CE is a highest priority of a sidelink logical channel for triggering an SL BSR.

Optionally, the priority corresponding to the non-padding UL BSR MAC CE is a highest priority of a logical channel on which to-be-transmitted data exists on an uplink (during UL MAC PDU packet assembly or during UL MAC PDU transmission). The priority corresponding to the non-padding SL BSR MAC CE is a highest priority of a sidelink logical channel on which to-be-transmitted data exists on the sidelink (during UL MAC PDU packet assembly or during UL MAC PDU transmission).

Optionally, the priority corresponding to the non-padding UL BSR MAC CE is a highest priority of a logical channel associated with a buffer size BS included in the non-padding UL BSR MAC CE. The priority corresponding to the non-padding SL BSR MAC CE is a highest priority of a sidelink logical channel associated with a buffer size BS included in the non-padding SL BSR MAC CE.

Optionally, the logical channel for triggering the non-padding UL BSR is a logical channel meeting an LCP restriction of a UL-SCH resource associated with the non-padding UL BSR MAC CE, and the logical channel on which the to-be-transmitted data exists on the uplink is a logical channel meeting the LCP restriction of the UL-SCH resource associated with the non-padding UL BSR MAC CE.

Optionally, the logical channel for triggering the non-padding SL BSR is a logical channel meeting an LCP restriction of a UL-SCH resource associated with the non-padding SL BSR MAC CE, and the sidelink logical channel on which the to-be-transmitted data exists on the sidelink is a sidelink logical channel meeting the LCP restriction of the UL-SCH resource associated with the non-padding SL BSR MAC CE.

Optionally, that the priority corresponding to the non-padding UL BSR MAC CE is not higher than a priority indicated by a first threshold may be that a priority value corresponding to the non-padding UL BSR MAC CE is greater than or equal to the first threshold. That the priority corresponding to the non-padding SL BSR MAC CE is higher than a priority indicated by a second threshold may be that a priority value corresponding to the non-padding UL BSR MAC CE is less than the second threshold.

Optionally, the first threshold and the second threshold may be predefined in a protocol or may be network configurations. The network configurations include an RRC dedicated signaling configuration, a SIB system broadcast message configuration, and a pre-configured pre-configuration.

It should be understood that, from another perspective of description, being in the first priority list may alternatively be expressed as being not in the first priority list, and being in the second priority list may alternatively be expressed as being not in the second priority list.

Optionally, the first priority list and the second priority list may be predefined in a protocol or may be network configurations. The network configurations include an RRC dedicated signaling configuration, a SIB system broadcast message configuration, and a pre-configured pre-configuration.

**Embodiment 7**

In a current technology, QoS information reported by a terminal device in a radio resource control (radio resource control, RRC) connected mode to request for a sidelink radio bearer SLRB configuration needs to be accurate to QoS information associated with destination (destination) information. However, same QoS information may be associated with different destination information. If the destination information is used as an anchor, same QoS information is repeatedly reported to a network device. Consequently, RRC signaling overheads are too large.

In view of this, this application further provides a communication method.

Manner 1:

The terminal device reports the QoS information. QoS profile (QoS profile) information is used as an anchor, and each piece of QoS profile information is associated with one or more pieces of destination information. In other words, the QoS information reported by the terminal device includes one QoS profile information list (one or more pieces of QoS profile information), and each piece of QoS profile information in the QoS profile list is associated with one destination information list (one or more pieces of destination information).

For example, a type of reported QoS information is shown below:

$$QoS\_ReportList = \{QoS\ 1,\ QoS\ 2,\ QoS\ 3,\ \ldots\}$$

QoS 1 = {QoS profile 1, dst-ReportAppliedList 1 = {DST 1, DST 2, DST 3, ...}}
QoS 2 = {QoS profile 2, dst-ReportAppliedList 2 = {DST 1, DST 2, DST 3, ...}}
QoS 3 = {QoS profile 3, dst-ReportAppliedList 3 = {DST 1, DST 2, DST 3, ...}}

QoS 1, QoS 2, and QoS 3 represent QoS information corresponding to different QoS profile information (one piece of QoS profile information and one or more pieces of destination information associated with the QoS profile information).

The QoS profile information represents a group of QoS parameter information, including one or more of a PC5 quality of service flow identifier (PC5 QoS flow identifier, PFI), a PC5 fifth generation quality of service identifier (PC5 5G quality of service identifier, PQI), a guaranteed flow bit rate (guaranteed flow bit rate, GFBR), a maximum flow bit rate (maximum flow bit rate, MFBR), a minimum required communication range (minimum required communication range), an allocation reservation priority ARP, a PC5 link aggregate maximum bit rate PC5 LINK-AMBR, default values default values, a resource type resource type (GBR, Delay critical GBR or Non-GBR), a priority level (priority level), a packet delay budget (packet delay budget, PDB), a packet error rate (packet error rate, PER), an averaging window averaging window (for GBR and Delay-critical GBR resource type only), and maximum data burst volume maximum data burst volume (for Delay-critical GBR resource type only) information.

Optionally, the QoS information may be reported by using a sidelink UE information (sidelink UE information, SUI) message or another RRC message.

Optionally, the QoS information may be reported in a full information manner (in which previously reported QoS information needs to be reported again) or in a delta manner (in which only updated QoS information is reported).

Optionally, one piece of QoS profile information may be represented by using one protocol predefined index.

Optionally, each piece of QoS profile information may further include resource scheduling mode information associated with the QoS profile information, for example, a mode 1, a mode 1, or a mode 1 + a mode 2.

Optionally, the destination DST information may be destination layer 2 ID (destination L2 ID) information or destination index (destination index) information. For example, the destination index information is an index associated with destination information in a destination L2 ID list (for example, v2x-DestinationInfoList) reported by using an SUI message.

Optionally, each piece of DST information may further include one or more of cast type information, carrier information, synchronization information, and resource scheduling mode information that are associated with the DST information.

Optionally, QoS_ReportList is reported in groups based on different cast types. The cast types include unicast, groupcast, and broadcast. For example, QoS information corresponding to three cast types is reported by using information elements IEs of three types: QoS_ReportListUnicast, QoS ReportListGroupcast, and QoS_ReportListBroadcast.

Optionally, each piece of QoS profile information may be associated with one index. For example, an index 1 is associated with a QoS profile 1, an index 2 is associated with a QoS profile 2, and an index 3 is associated with a QoS profile 3. By analogy, indexes are sequentially associated with all QoS profile information in a QoS profile list. It should be understood that the terminal device and the network device both learn of QoS profile information associated with each index. Optionally, the index associated with each piece of QoS profile information and the QoS profile information corresponding to the index may be reported to the network device together.

Manner 2:

The terminal device reports the QoS information. Cast type (cast type) information is used as a level 1 anchor, and each piece of cast type information is associated with one or more pieces of QoS profile (QoS profile) information. QoS profile information is used as a level 2 anchor, and each piece of QoS profile information is associated with one or more pieces of destination information. In other words, the QoS information reported by the terminal device includes one cast type information list (one or more pieces of cast type information), each piece of cast type information in the cast type information list is associated with one QoS profile information list (one or more pieces of QoS profile information), and each piece of QoS profile information in the QoS profile information list is associated with one destination information list (one or more pieces of destination information).

For example, a type of reported QoS information is shown below:

$$QoS\_ReportList = \{QoS\ 1,\ QoS\ 2,\ QoS\ 3\}$$

QoS 1 = {unicast, QoS_profileList 1 = {QoS profile 1, QoS profile 2, QoS profile 3, ...}}
QoS 2 = {groupcast, QoS_profileList 2 = {QoS profile 1, QoS profile 2, QoS profile 3, ...}}
QoS 3 = {broadcast, QoS_profileList 3= {QoS profile 1, QoS profile 2, QoS profile 3, ...}}
QoS profile 1 = {QoS parameters 1, dst-ReportAppliedList = {DST 1, DST 2, DST 3, ...}}
QoS profile 2 = {QoS parameters 2, dst-ReportAppliedList = {DST 1, DST 2, DST 3, ...}}
QoS profile 3 = {QoS parameters 3, dst-ReportAppliedList = {DST 1, DST 2, DST 3, ...}}

QoS 1, QoS 2, and QoS 3 respectively represent QoS information associated with unicast, groupcast, and broadcast (one QoS profile information list, where each piece of QoS profile information in the QoS profile is associated with one destination information list).

Optionally, QoS_ReportList includes one or more of QoS 1, QoS 2, and QoS 3. Optionally, QoS 1, QoS 2, and QoS 3 may be arranged in a random order.

The QoS profile information represents a group of QoS parameter information, including one or more of a PC5 quality of service flow identifier (PC5 QoS flow identifier, PFI), a PC5 fifth generation quality of service identifier (PC5 5G quality of service identifier, PQI), a guaranteed flow bit rate (guaranteed flow bit rate, GFBR), a maximum flow bit rate (maximum flow bit rate, MFBR), a minimum required communication range (minimum required communication range), an allocation reservation priority ARP, a PC5 link aggregate maximum bit rate PC5 LINK-AMBR, default values default values, a resource type resource type (GBR, Delay critical GBR or Non-GBR), a priority level (Priority Level), a packet delay budget (Packet Delay Budget, PDB), a packet error rate (Packet Error Rate, PER), an averaging window averaging window (for GBR and Delay-critical GBR resource type only), and maximum data burst volume maximum data burst volume (for Delay-critical GBR resource type only) information.

Optionally, the QoS information may be reported by using a sidelink UE information (sidelink UE information, SUI) message or another RRC message.

Optionally, the QoS information may be reported in a full information manner (in which previously reported QoS information needs to be reported again) or in a delta manner (in which only updated QoS information is reported).

Optionally, one piece of QoS profile information may be represented by using one protocol predefined index.

Optionally, each piece of QoS profile information may further include resource scheduling mode information associated with the QoS profile information, for example, a mode 1, a mode 1, or a mode 1 + a mode 2.

Optionally, the destination DST information may be destination layer 2 ID (destination L2 ID) information or destination index (destination index) information. For example, the destination index information is an index associated with destination information in a destination L2 ID list (for example, v2x-DestinationInfoList) reported by using an SUI message.

Optionally, each piece of DST information may further include one or more of cast type information, carrier information, synchronization information, and resource scheduling mode information that are associated with the DST information.

Optionally, each piece of QoS profile information is associated with one index. For example, an index 1 is associated with a QoS profile 1 in the QoS_profileList 1, an index 2 is associated with a QoS profile 2 in the QoS _profileList 1, an index 3 is associated with a QoS profile 3 in the QoS_profileList 1, and an index 4 is associated with a QoS profile 1 in the QoS_profile 2. By analogy, indexes are sequentially associated with all QoS profile information in each QoS_profile-List. In other words, when a plurality of QoS_profileLists are reported, indexes need to be sequentially associated with all QoS profile information in all the QoS_profileLists. It should be understood that the terminal device and the network device both learn of the QoS profile information associated with the index. Optionally, an index associated with each piece of QoS profile information and the QoS profile information corresponding to the index may be reported to the network device together.

Manner 3:

When the terminal device reports QoS information, each piece of QoS information includes one piece of destination information and one piece of QoS profile information associated with the destination information.

For example, a type of reported QoS information is shown below:

$$QoS\_ReportList = \{QoS\ 1, QoS\ 2, QoS\ 3, QoS\ 4, QoS\ 5, \ldots\}$$

QoS 1 = {DST 1, QoS profile 1}
QoS 2 = {DST 1, QoS profile 2}
QoS 3 = {DST 1, QoS profile 3}
QoS 4 = {DST 2, QoS profile 1}
QoS 5 = {DST 2, QoS profile 2}

QoS 1, QoS 2, QoS 3, QoS 4, and QoS 5 each represent one piece of destination information and one piece of QoS profile information associated with the destination information.

Optionally, QoS 1, QoS 2, QoS 3, QoS 4, and QoS 5 may be arranged in a random order.

The QoS profile information represents a group of QoS parameter information, including one or more of a PC5 quality of service flow identifier (PC5 QoS flow identifier, PFI), a PC5 fifth generation quality of service identifier (PC5 5G quality of service identifier, PQI), a guaranteed flow bit rate (guaranteed flow bit rate, GFBR), a maximum flow bit rate (maximum flow bit rate, MFBR), a minimum required communication range (minimum required communication range), an allocation reservation priority ARP, a PC5 link aggregate maximum bit rate PC5 LINK-AMBR, default values default values, a resource type resource type (GBR, Delay critical GBR or Non-GBR), a priority level (Priority Level), a packet delay budget (Packet Delay Budget, PDB), a packet error rate (Packet Error Rate, PER), an averaging window averaging window (for GBR and Delay-critical GBR resource type only), and maximum data burst volume maximum data burst volume (for Delay-critical GBR resource type only) information.

Optionally, the QoS information may be reported by using a sidelink UE information (sidelink UE information, SUI) message or another RRC message.

Optionally, the QoS information may be reported in a full information manner (in which previously reported QoS information needs to be reported again) or in a delta manner (in which only updated QoS information is reported).

Optionally, one piece of QoS profile information may be represented by using one protocol predefined index.

Optionally, each piece of QoS profile information may further include resource scheduling mode information associated with the QoS profile information, for example, a mode 1, a mode 1, or a mode 1 + a mode 2.

Optionally, the destination DST information may be destination layer 2 ID (destination L2 ID) information or destination index (destination index) information. For example, the destination index information is an index associated with destination information in a destination L2 ID list (for example, v2x-DestinationInfoList) reported by using an SUI message.

Optionally, each piece of DST information may further include one or more of cast type information, carrier information, synchronization information, and resource scheduling mode information that are associated with the DST information.

Optionally, each piece of QoS information is associated with one index. For example, an index 1 is associated with QoS 1, an index 2 is associated with QoS 2 an index 3 is associated with QoS 3, an index 4 is associated with QoS 4, and index 5 is associated with QoS 5. By analogy, indexes are sequentially associated with all QoS information, that is, an index is sequentially associated with each piece of destination information and QoS profile information associated with the destination information. It should be understood that the terminal device and the network device both learn of the QoS information associated with the index. Optionally, an index associated with each piece of QoS information and the QoS information corresponding to the index may be reported to the network device together.

**Embodiment 8**

In a current technology, SLRB configuration information sent by a network device to a terminal device in a radio resource control (radio resource control, RRC) connected mode needs to include destination (destination) information and QoS profile (QoS profile) information. However, same QoS profile information may be associated with different destination information. If one SLRB configuration can be associated with only one piece of destination information, even if same QoS profile information corresponding to different destination information needs to associated with a same SLRB parameter configuration, the SLRB parameter configuration needs to be repeatedly sent a plurality of times. Consequently, RRC signaling overheads are too large.

In view of this, this application further provides a communication method.

Design 1:

The network device sends SLRB configuration information. The SLRB configuration information includes one SLRB configuration list (one or more SLRB configurations). Each SLRB configuration in the SLRB configuration list is associated with one group of SLRB parameters, one destination information list (one or more pieces of destination information), and one QoS profile information list (one or more pieces of QoS profile information).

For example, a type of SLRB configuration information is shown below:

$$SLRB\_ConfigList = \{SLRB\_Config\ 1,\ SLRB\_Config\ 2,\ SLRB\_Config\ 3,\ ...\}$$

SLRB_Config 1 = {SLRB parameters 1, dst-SLRB-AppliedList 1 = {DST 1, DST 2, DST 3, ...}, QoS profileList 1 = {QoS profile 1, QoS profile 2, QoS profile 3, ...}}
SLRB_Config 2 = {SLRB parameters 2, dst-SLRB-AppliedList 2 = {DST 1, DST 2, DST 3, ...}, QoS profileList 2 = {QoS profile 1, QoS profile 2, QoS profile 3, ...}}
SLRB_Config 3 = {SLRB parameters 3, dst-SLRB-AppliedList 3 = {DST 1, DST 2, DST 3, ...}, QoS profileList 3 = {QoS profile 1, QoS profile 2, QoS profile 3, ...}}

SLRB_Config 1, SLRB_Config 2, and SLRB_Config 3 represent different SLRB configurations (a group of SLRB parameters, one or more pieces of destination information associated with the group of SLRB parameters, and one or more pieces of QoS profile information associated with the group of SLRB parameters).

A group of SLRB parameters includes one or more of a set of SDAP entity configuration parameters, a set of PDCP entity configuration parameters, a set of RLC entity configuration parameters, a set of LCH configuration parameters, a set of MAC entity configuration parameters, and a set of PHY configuration parameters.

The QoS profile information represents a group of QoS parameter information, including one or more of a PC5 quality of service flow identifier (PC5 QoS flow identifier, PFI), a PC5 fifth generation quality of service identifier (PC5 5G quality of service identifier, PQI), a guaranteed flow bit rate (guaranteed flow bit rate, GFBR), a maximum flow bit rate (maximum flow bit rate, MFBR), a minimum required communication range (minimum required communication range), an allocation reservation priority ARP, a PC5 link aggregate maximum bit rate PC5 LINK-AMBR, default values default values, a resource type resource type (GBR, Delay critical GBR or Non-GBR), a priority level (Priority Level), a packet delay budget (Packet Delay Budget, PDB), a packet error rate (Packet Error Rate, PER), an averaging window averaging window (for GBR and Delay-critical GBR resource type only), and maximum data burst volume maximum data burst volume (for Delay-critical GBR resource type only) information.

Optionally, the SLRB configuration information may be sent by using a radio resource control RRC reconfiguration message, an RRC establishment message, or an RRC reestablishment message.

Optionally, the SLRB configuration information may be sent in a full information (in which previously sent SLRB configuration information needs to be sent again) or in a delta manner (in which only updated SLRB configuration information is sent).

Optionally, one piece of SLRB configuration may further include one SLRB ID identifier or one SLRB index.

Optionally, one set of configuration parameters of the LCH may further include one LCH ID identifier or one LCH index.

Optionally, one SLRB configuration may further include resource scheduling mode information associated with the SLRB configuration, for example, a mode 1, a mode 2, or a mode 1+a mode 2.

Optionally, the destination information list and the QoS profile information list may be included in the configuration parameters of the SDAP entity.

Optionally, one group of SLRB parameters may be represented by one index. For example, one standard protocol predefined index represents one group of standard predefined SLRB parameters (one or more of a set of standard predefined SDAP entity configuration parameters, a set of standard predefined PDCP entity configuration parameters, a set of standard predefined RLC entity configuration parameters, a set of standard predefined LCH configuration parameters, a set of standard predefined MAC entity configuration parameters, and a set of standard predefined PHY configuration parameters).

Optionally, one piece of QoS profile information may be represented by using one protocol predefined index.

Optionally, one piece of QoS profile information may be represented by using one index, and the index is an index associated with each piece of QoS profile information when the terminal device reports the QoS information.

Optionally, the destination destination information may be destination layer 2 ID (destination L2 ID) information or destination index (destination index) information. For example, the destination index information is an index associated with destination information in a destination L2 ID list (for example, v2x-DestinationInfoList) reported by using an SUI message.

Optionally, each piece of destination information may further include one or more of cast type information, carrier information, synchronization information, and resource scheduling mode information that are associated with the destination information.

Optionally, SLRB_ConfigList is delivered in groups based on different cast types. The cast types include unicast, groupcast, and broadcast. For example, SLRB configuration information corresponding to three cast types is reported by using information elements IEs of three types: SLRB_UnicastConfigList, SLRB_GroupcastConfigList, and SLRB_Broad-ConfigList.

Optionally, specific content of the destination information included in dst-SLRB-AppliedList and the QoS profile information included in QoS profileList depends on a base station.

Design 2:

The network device sends SLRB configuration information. The SLRB configuration information includes one cast type (cast type) information list (one or more pieces of cast type information). Each piece of cast type information in the cast type information list is associated with one SLRB configuration list. Each SLRB configuration in the SLRB configuration list is associated with one group of SLRB parameters, one destination information list (one or more pieces of destination information), and one QoS profile information list (one or more pieces of QoS profile information).

For example, a type of SLRB configuration information is shown below:

$$\text{SLRB\_Config\_casttype} = \{\text{SLRB 1, SLRB 2, SLRB 3}\}$$

SLRB 1 = {unicast, SLRB_ConfigList 1 = { SLRB_Config 1, SLRB_Config 2, SLRB_Config 3, ...}}
SLRB 2 = {groupcast, SLRB_ConfigList 2 = {SLRB_Config 1, SLRB_Config 2, SLRB_Config 3, ...}}
SLRB 3 = {broadcast, SLRB_ConfigList 3 = {SLRB_Config 1, SLRB_Config 2, SLRB_Config 3, ...}}
SLRB_Config 1 = {SLRB parameters 1, dst-SLRB-AppliedList 1 = {DST 1, DST 2, DST 3, ...}, QoS profileList 1 = {QoS profile 1, QoS profile 2, QoS profile 3, ...}}
SLRB_Config 2 = {SLRB parameters 2, dst-SLRB-AppliedList 2 = {DST 1, DST 2, DST 3, ...}, QoS profileList 2 = {QoS profile 1, QoS profile 2, QoS profile 3, ...}}
SLRB_Config 3 = {SLRB parameters 3, dst-SLRB-AppliedList 3 = {DST 1, DST 2, DST 3, ...}, QoS profileList 3 = {QoS profile 1, QoS profile 2, QoS profile 3, ...}}

SLRB 1, SLRB 2, and SLRB 3 respectively represent SLRB configuration information associated with unicast, groupcast, and broadcast (one SLRB configuration list, where each SLRB configuration in the SLRB configuration list is associated with one group of SLRB parameters, one destination information list (one or more pieces of destination information), and one QoS profile information list (one or more pieces of QoS profile information)).

Optionally, SLRB_Config_cast type includes one or more of an SLRB 1, an SLRB 2, and an SLRB 3. Optionally, the SLRB 1, the SLRB 2, and the SLRB 3 may be arranged in a random order.

SLRB_Config 1, SLRB_Config 21, and SLRB_Config 3 represent different SLRB configurations (a group of SLRB parameters, one or more pieces of destination information associated with the group of SLRB parameters, and one or more pieces of QoS profile information associated with the group of SLRB parameters).

A group of SLRB parameters includes one or more of a set of SDAP entity configuration parameters, a set of PDCP entity configuration parameters, a set of RLC entity configuration parameters, a set of LCH configuration parameters, a set of MAC entity configuration parameters, and a set of PHY configuration parameters.

The QoS profile information represents a group of QoS parameter information, including one or more of a PC5 quality of service flow identifier (PC5 QoS flow identifier, PFI), a PC5 fifth generation quality of service identifier (PC5 5G quality of service identifier, PQI), a guaranteed flow bit rate (guaranteed flow bit rate, GFBR), a maximum flow bit rate (maximum flow bit rate, MFBR), a minimum required communication range (minimum required communication range), an allocation reservation priority ARP, a PC5 link aggregate maximum bit rate PC5 LINK-AMBR, default values default values, a resource type resource type (GBR, Delay critical GBR or Non-GBR), a priority level priority level, a packet delay budget (Packet Delay Budget, PDB), a packet error rate (Packet Error Rate, PER), an averaging window averaging window (for GBR and Delay-critical GBR resource type only), and maximum data burst volume maximum data burst volume (for Delay-critical GBR resource type only) information.

Optionally, the SLRB configuration information may be sent by using a radio resource control RRC reconfiguration message, an RRC establishment message, or an RRC reestablishment message.

Optionally, the SLRB configuration information may be sent in a full information (in which previously sent SLRB configuration information needs to be sent again) or in a delta manner (in which only updated SLRB configuration information is sent).

Optionally, one piece of SLRB configuration may further include one SLRB ID identifier or one SLRB index.

Optionally, one set of configuration parameters of the LCH may further include one LCH ID identifier or one LCH index.

Optionally, one SLRB configuration may further include resource scheduling mode information associated with the SLRB configuration, for example, a mode 1, a mode 2, or a mode 1+a mode 2.

Optionally, the destination information list and the QoS profile information list may be included in the configuration parameters of the SDAP entity.

Optionally, one group of SLRB parameters may be represented by one index. For example, one standard protocol predefined index represents one group of standard predefined SLRB parameters (one or more of a set of standard predefined SDAP entity configuration parameters, a set of standard predefined PDCP entity configuration parameters, a set of standard predefined RLC entity configuration parameters, a set of standard predefined LCH configuration parameters, a set of standard predefined MAC entity configuration parameters, and a set of standard predefined PHY configuration parameters).

Optionally, one piece of QoS profile information may be represented by using one protocol predefined index.

Optionally, one piece of QoS profile information may be represented by using one index, and the index is an index associated with each piece of QoS profile information when the terminal device reports the QoS information.

Optionally, the destination destination information may be destination layer 2 ID (destination L2 ID) information or destination index (destination index) information. For example, the destination index information is an index associated with destination information in a destination L2 ID list (for example, v2x-DestinationInfoList) reported by using an SUI message.

Optionally, each piece of destination information may further include one or more of cast type information, carrier information, synchronization information, and resource scheduling mode information that are associated with the destination information.

Optionally, specific content of the destination information included in dst-SLRB-AppliedList and the QoS profile information included in QoS profileList depends on a base station.

An embodiment of this application further provides a communication apparatus. FIG. 6 is a schematic diagram of a structure of another communication apparatus according to an embodiment of this application. The communication apparatus 600 includes a transceiver module 610 and a processing module 620. The communication apparatus may be configured to implement the function of the terminal device in any one of the foregoing method embodiments. For example, the communication apparatus may be a terminal device, for example, a handheld terminal device or a vehicle-mounted terminal device. Alternatively, the communication apparatus may be a chip included in the terminal device, or an apparatus including the terminal device, for example, vehicles of various types.

When the communication apparatus is used as a terminal device to perform the method embodiment shown in FIG. 2, the processing module 620 is configured to determine that uplink transmission and sidelink transmission both exist; and the transceiver module 610 is configured to: when one or more of a first condition, a second condition, a third condition, and a fourth condition are not met, perform the sidelink transmission; or the transceiver module 610 is configured to: when any one of one or more of a first condition, a second condition, a third condition, and a fourth condition is met, perform, by the terminal device, the uplink transmission.

The first condition includes one or more of the following: a highest priority of a logical channel included in an uplink medium access control protocol data unit UL MAC PDU sent on an uplink is higher than a priority indicated by a first threshold, a priority corresponding to an uplink buffer status report medium access control control element UL BSR MAC CE included in the UL MAC PDU is higher than the priority indicated by the first threshold, and a priority corresponding to an uplink scheduling request UL SR sent on the uplink is higher than the priority indicated by the first threshold.

The second condition includes one or more of the following: a priority corresponding to a sidelink buffer status report medium access control control element SL BSR MAC CE included in the UL MAC PDU is higher than a priority indicated by a second threshold, and a priority corresponding to a sidelink scheduling request SL SR sent on the uplink is higher than the priority indicated by the second threshold.

The third condition includes one or more of the following: the priority corresponding to the SL BSR MAC CE included in the UL MAC PDU is higher than a highest priority of a sidelink logical channel included in a sidelink medium access control protocol data unit SL MAC PDU, and the priority corresponding to the SL SR is higher than the highest priority of the sidelink logical channel included in the SL MAC PDU.

The fourth condition includes: the highest priority of the sidelink logical channel included in the SL MAC PDU is lower than or equal to the priority indicated by the second threshold.

In a possible design, the priority corresponding to the UL BSR MAC CE is a priority of a logical channel for triggering an uplink buffer status report UL BSR, a priority of a logical channel on which to-be-transmitted data exists on the uplink, or a priority of a logical channel associated with a buffer size BS included in the UL BSR MAC CE;

the priority corresponding to the UL SR is a priority of a logical channel for triggering the UL SR;
the priority corresponding to the SL BSR MAC CE is a priority of a sidelink logical channel for triggering a sidelink buffer status report SL BSR, a priority of a sidelink logical channel on which to-be-transmitted data exists on a sidelink, or a priority of a sidelink logical channel associated with a buffer size BS included in the SL BSR MAC CE; and
the priority corresponding to the SL SR is a priority of a sidelink logical channel for triggering the SL SR.

In a possible design, the transceiver module 610 is configured to: when one or more of the first condition, the second condition, the third condition, the fourth condition, and a fifth condition are not met, perform the sidelink transmission; or the transceiver module 610 is configured to: when any one of one or more of the first condition, the second condition, the third condition, the fourth condition, and a fifth condition is met, perform the uplink transmission.

The fifth condition is: one or more MAC CEs specified or configured as follows are sent on the uplink: a cell radio network temporary identity C-RNTI MAC CE, a grant confirmation MAC CE, a non-padding link buffer status report BSR MAC CE, a non-padding sidelink buffer status report SL BSR MAC CE, and a power headroom report PHR MAC CE.

In a possible design, the transceiver module 610 is configured to: when one or more of the first condition, the second condition, the third condition, the fourth condition, the fifth condition, and a sixth condition are not met, perform the sidelink transmission; or the transceiver module 610 is configured to: when any one of one or more of the first condition, the second condition, the third condition, the fourth condition, the fifth condition, and a sixth condition is met, perform the uplink transmission. The sixth condition is: a random access process RACH message or an emergency call message is sent on the uplink.

In a possible design, the uplink transmission is initial transmission or re-transmission, and the sidelink transmission is initial transmission or re-transmission.

In a possible design, the uplink supports a first communication standard or a second communication standard, and the sidelink supports the first communication standard or the second communication standard.

When the communication apparatus is used as a terminal device to perform the method embodiment shown in FIG. 4, the processing module 620 is configured to determine that sending of an uplink scheduling request UL SR and sending of a sidelink scheduling request SL SR both exist; and the transceiver module 610 is configured to: when a priority corresponding to the UL SR is lower than or equal to a priority indicated by a first threshold and a priority corresponding to the SL SR is higher than a priority indicated by a second threshold, send the SL SR; or the transceiver module 610 is configured to: when a priority corresponding to the UL SR is higher than a priority indicated by a first threshold or a priority corresponding to the SL SR is lower than or equal to a priority indicated by a second threshold, send the UL SR.

In a possible design, the priority corresponding to the UL SR is a priority of a logical channel for triggering the UL SR; and the priority corresponding to the SL SR is a priority of a sidelink logical channel for triggering the SL SR.

The processing module 620 in the communication apparatus may be implemented by a processor or a processor-related circuit component, and the transceiver module 610 may be implemented by a transceiver or a transceiver-related circuit component. Operations and/or functions of the modules in the communication apparatus are respectively used to implement corresponding procedures of the methods shown in FIG. 2 to FIG. 5. For brevity, details are not described herein again.

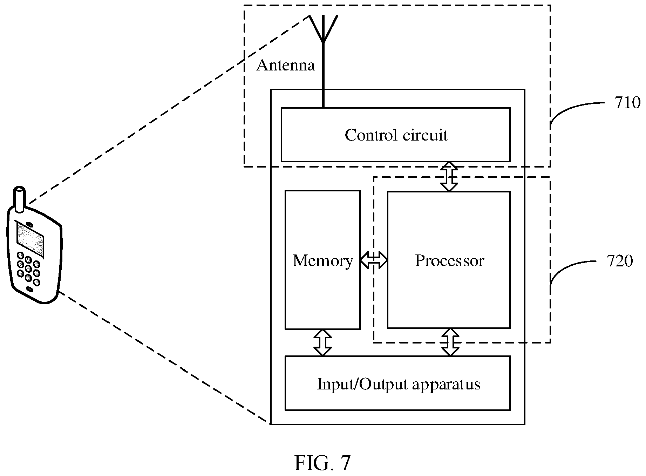

FIG. 7 is another schematic diagram of a structure of a communication apparatus according to an embodiment of this application. The communication apparatus may be specifically a terminal device. For ease of understanding and illustration, in FIG. 7, a mobile phone is used as an example of the terminal device. As shown in FIG. 7, the terminal device includes a processor, and may further include a memory. In addition, the terminal device may further include a radio frequency circuit, an antenna, an input/output apparatus, and the like. The processor is mainly configured to: process a communication protocol and communication data, control the terminal device, execute a software program, process data of the software program, and the like. The memory is configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to: receive data entered by a user, and output data to the user. It should be noted that terminal devices of some types may have no input/output apparatus.

When needing to send data, after performing baseband processing on the to-be-sent data, the processor outputs a baseband signal to the radio frequency circuit, and the radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor, and the processor converts the baseband signal into data and processes the data. For ease of description, FIG. 7 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the radio frequency circuit and the antenna that has sending and receiving functions may be considered as a transceiver unit of the terminal device, and the processor that has a processing function may be considered as a processing unit of the terminal device. As shown in FIG. 7, the terminal device includes a transceiver unit 710 and a processing unit 720. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 710 and that is configured to implement a receiving function may be considered as a receiving unit, and a component that is in the transceiver unit 710 and that is configured to implement a sending function may be considered as a sending unit. That is, the transceiver unit 710 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like. It should be understood that the transceiver unit 710 is configured to perform a sending operation and a receiving operation on a terminal device side in the foregoing method embodiments, and the processing unit 720 is configured to perform an operation other than the receiving operation and the sending operation of the terminal device in the foregoing method embodiments.

An embodiment of this application further provides a chip system, including a processor. The processor is coupled to a memory. The memory is configured to store a program or instructions. When the program or the instructions are executed by the processor, the chip system is enabled to implement the method in any method embodiment described above.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

For example, the chip system may be a field programmable gate array (field programmable gate array, FPGA), may be an application-specific integrated circuit (application-specific integrated circuit, ASIC), may be a system-on-a-chip (system-on-a-chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip.

It should be understood that steps in the foregoing method embodiments may be implemented by using a hardware integrated logical circuit in the processor or instructions in a form of software. The steps of the method disclosed with reference to embodiments of this application may be directly performed and completed by a hardware processor, or may be performed and completed by using a combination of hardware in the processor and a software module.

An embodiment of this application further provides a computer-readable storage medium. The computer storage medium stores computer-readable instructions. When a computer reads and executes the computer-readable instructions, the computer is enabled to perform the method in any method embodiment described above.

An embodiment of this application further provides a computer program product. When a computer reads and executes the computer program product, the computer is enabled to perform the method in any method embodiment described above.

An embodiment of this application further provides a communication system. The communication system includes a network device and at least one terminal device described in the foregoing method embodiments.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It may be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. By way of example but not limitative description, RAMs of many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) is integrated into the processor.

It should be noted that, the memory described in this specification is intended to include but is not limited to these memories and memories of any other appropriate types.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described systems, apparatuses, and units, refer to a corresponding process in the foregoing method embodiments. Details are not described herein again.

In the several embodiments provided in this application, it should be understood that the disclosed systems, apparatuses, and methods may be implemented in another manner. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   determining, by a terminal device, that uplink transmission and sidelink transmission both exist; and
   when a first condition is met, performing, by the terminal device, the uplink transmission, wherein
   the first condition comprises a priority corresponding to an uplink scheduling request, UL SR, sent on a physical uplink control channel, PUCCH, is higher than the priority indicated by the first threshold, the priority corresponding to the UL SR is a priority of a logical channel for triggering the UL SR.

2. The method according to claim 1, wherein the method further comprises:

   when one or more of the first condition, a second condition, a third condition, a fourth condition, and a fifth condition are not met, performing, by the terminal device, the sidelink transmission; or
   when any one of one or more of the first condition, the second condition, the third condition, the fourth condition, and a fifth condition is met, performing, by the terminal device, the uplink transmission, wherein
   the second condition comprises one or more of the following: a priority corresponding to a sidelink buffer status report medium access control control element, SL BSR MAC CE, comprised in the UL MAC PDU is higher than a priority indicated by a second threshold, and a priority corresponding to a sidelink scheduling request, SL SR, sent on the uplink is higher than the priority indicated by the second threshold;
   the third condition comprises one or more of the following: the priority corresponding to the SL BSR MAC CE comprised in the UL MAC PDU is higher than a highest priority of a sidelink logical channel comprised in a sidelink medium access control protocol data unit, SL MAC PDU, and the priority corresponding to the SL SR is higher than the highest priority of the sidelink logical channel comprised in the SL MAC PDU;
   the fourth condition comprises: the highest priority of the sidelink logical channel comprised in the SL MAC PDU is lower than or equal to the priority indicated by the second threshold; and
   the fifth condition is: one or more MAC CEs specified or configured as follows are sent on the uplink:
   a cell radio network temporary identity, C-RNTI, MAC CE, a configured grant confirmation MAC CE, a non-padding link buffer status report, BSR, MAC CE, a non-padding sidelink buffer status report, SL BSR, MAC CE, and a power headroom report, PHR, MAC CE.

3. The method according to claim 2, wherein the method further comprises:

# EP 4 030 838 B1

when one or more of the first condition, the second condition, the third condition, the fourth condition, the fifth condition, and a sixth condition are not met, performing, by the terminal device, the sidelink transmission; or when any one of one or more of the first condition, the second condition, the third condition, the fourth condition, the fifth condition, and a sixth condition is met, performing, by the terminal device, the uplink transmission, wherein

the sixth condition is: a random access process, RACH, message or an emergency call message is sent on the uplink.

4. The method according to any one of claims 1 to 3, wherein the uplink transmission is initial transmission or re-transmission, and the sidelink transmission is initial transmission or re-transmission.

5. The method according to any one of claims 1 to 4, wherein the uplink supports a first communication standard or a second communication standard, and the sidelink supports the first communication standard or the second communication standard.

6. An apparatus, wherein the apparatus is configured to perform the method according to any one of claims 1 to 5.

7. A computer readable storage medium comprising an instruction, wherein which, when executed by a computer device, cause the computer device to perform the method according to any one of claims 1 to 5.

8. A computer program product, comprising an instruction, wherein which, when executed by a computer device, cause the computer device to perform the method according to any one of claims 1 to 5.

**Patentansprüche**

1. Kommunikationsverfahren, wobei das Verfahren umfasst:

Bestimmen, durch ein Endgerät, dass sowohl Aufwärtsstreckenübertragung als auch "Sidelink"-Übertragung vorhanden sind; und
wenn eine erste Bedingung erfüllt ist, Durchführen, durch das Endgerät, der Aufwärtsstreckenübertragung, wobei
die erste Bedingung eine Priorität korrespondierend mit einer in einem physikalischen Aufwärtsstrecken-Steuerkanal, PUCCH, gesandten Aufwärtsstrecken-Terminierungsanforderung, UL SR, umfasst, die höher als die durch den ersten Schwellenwert angegebene Priorität ist, wobei die Priorität korrespondierend mit der UL SR eine Priorität eines logischen Kanals zum Auslösen der UL SR ist.

2. Verfahren nach Anspruch 1, wobei das Verfahren ferner umfasst:

wenn eine oder mehrere der ersten Bedingung, einer zweiten Bedingung, einer dritten Bedingung, einer vierten Bedingung und einer fünften Bedingung nicht erfüllt sind, Durchführen, durch das Endgerät, der "Sidelink"-Übertragung; oder
wenn eine beliebige eine einer oder mehrerer der ersten Bedingung, der zweiten Bedingung, der dritten Bedingung, der vierten Bedingung und einer fünften Bedingung erfüllt ist, Durchführen, durch das Endgerät, der Aufwärtsstreckenübertragung, wobei
die zweite Bedingung eines oder mehrere des Folgenden umfasst: eine Priorität korrespondierend mit einem in der UL MAC PDU enthaltenen "Sidelink"-Zwischenspeicherstatus-Berichtsmedium-Zugangssteuerung-Steuerelement, SL BSR MAC CE, ist höher als eine durch einen zweiten Schwellenwert angegebene Priorität und eine Priorität korrespondierend mit einer in der Aufwärtsstrecke gesandten "Sidelink"-Terminierungsanforderung, SL SR, ist höher als die durch den zweiten Schwellenwert angegebene Priorität;
die dritte Bedingung eines oder mehrere des Folgenden umfasst: die Priorität korrespondierend mit dem in der UL MAC PDU enthaltenen SL BSR MAC CE ist höher als eine höchste Priorität eines in einer "Sidelink"-Medienzugangssteuerung-Protokolldateneinheit, SL MAC PDU, enthaltenen logischen "Sidelink"-Kanals und die Priorität korrespondierend mit der SL SR ist höher als die höchste Priorität des in der SL MAC PDU enthaltenen logischen "Sidelink"-Kanals;
die vierte Bedingung umfasst: die höchste Priorität des in der SL MAC PDU enthaltenen logischen "Sidelink"-Kanals ist niedriger als die oder gleich der durch den zweiten Schwellenwert angegebenen Priorität; und
die fünfte Bedingung ist: ein oder mehrere wie folgt spezifizierte oder konfigurierte MAC CEs werden in der

29

Aufwärtsstrecke gesandt:
ein MAC CE einer temporären Identität eines Zellfunknetzwerks, C-RNTI, ein MAC CE einer konfigurierten Bewilligungsbestätigung, ein MAC CE eines nicht aufgefüllten Verknüpfungs-Zwischenspeicherstatusberichts, BSR, ein MAC CE eines nicht aufgefüllten "Sidelink"-Zwischenspeicherstatusberichts, SL BSR, und ein MAC CE eines Leistungsreserveberichts, PHR.

3. Verfahren nach Anspruch 2, wobei das Verfahren ferner umfasst:

wenn eine oder mehrere der ersten Bedingung, der zweiten Bedingung, der dritten Bedingung, der vierten Bedingung, der fünften Bedingung und einer sechsten Bedingung nicht erfüllt sind, Durchführen, durch das Endgerät, der "Sidelink"-Übertragung; oder
wenn eine beliebige eine einer oder mehrerer der ersten Bedingung, der zweiten Bedingung, der dritten Bedingung, der vierten Bedingung, der fünften Bedingung und einer sechsten Bedingung erfüllt ist, Durchführen, durch das Endgerät, der Aufwärtsstreckenübertragung, wobei
die sechste Bedingung ist: eine Zufallszugangsprozess- bzw. RACH-Nachricht oder eine Notrufnachricht wird in der Aufwärtsstrecke gesandt.

4. Verfahren nach einem der Ansprüche 1 bis 3, wobei die Aufwärtsstreckenübertragung eine anfängliche Übertragung oder eine Neuübertragung ist und die "Sidelink"-Übertragung eine anfängliche Übertragung oder eine Neuübertragung ist.

5. Verfahren nach einem der Ansprüche 1 bis 4, wobei die Aufwärtsstrecke einen ersten Kommunikationsstandard oder einen zweiten Kommunikationsstandard unterstützt und der "Sidelink" den ersten Kommunikationsstandard oder den zweiten Kommunikationsstandard unterstützt.

6. Vorrichtung, wobei die Vorrichtung zum Durchführen des Verfahrens nach einem der Ansprüche 1 bis 5 konfiguriert ist.

7. Computerlesbares Speichermedium, umfassend eine Anweisung, wobei diese, wenn sie durch ein Computergerät ausgeführt wird, das Computergerät veranlasst, das Verfahren nach einem der Ansprüche 1 bis 5 durchzuführen.

8. Computerprogrammprodukt, umfassend eine Anweisung, wobei diese, wenn sie durch ein Computergerät ausgeführt wird, das Computergerät veranlasst, das Verfahren nach einem der Ansprüche 1 bis 5 durchzuführen.

**Revendications**

1. Procédé de communication, le procédé comprenant :

la détermination, par un dispositif terminal, qu'une transmission en liaison montante et une transmission en liaison latérale existent ; et
lorsqu'une première condition est remplie, l'exécution, par le dispositif terminal, de la transmission en liaison montante,
la première condition comprenant qu'une priorité correspondant à une demande de programmation de liaison montante, UL SR, envoyée sur un canal de commande de liaison montante physique, PUCCH, est plus haute que la priorité indiquée par le premier seuil, la priorité correspondant à la demande UL SR étant une priorité d'un canal logique pour déclencher la demande UL SR.

2. Procédé selon la revendication 1, le procédé comprenant en outre :

lorsqu'une ou plusieurs de la première condition, d'une deuxième condition, d'une troisième condition, d'une quatrième condition et d'une cinquième condition ne sont pas remplies, l'exécution, par le dispositif terminal, de la transmission en liaison latérale ; ou
lorsqu'une quelconque des une ou plusieurs de la première condition, de la deuxième condition, de la troisième condition, de la quatrième condition et d'une cinquième condition sont remplies, l'exécution, par le dispositif terminal, de la transmission en liaison montante,
la deuxième condition comprenant une ou plusieurs des conditions suivantes : une priorité correspondant à un élément de commande de commande d'accès à support de rapport d'état de tampon de liaison latérale, SL BSR MAC CE, compris dans l'unité de données UL MAC PDU, est plus haute qu'une priorité indiquée par un deuxième seuil, et une priorité correspondant à une demande de programmation de liaison latérale, SL SR, envoyée sur la liaison montante est plus haute que la priorité indiquée par le deuxième seuil ;

la troisième condition comprenant une ou plusieurs des conditions suivantes : la priorité correspondant à l'élément de commande SL BSR MAC CE compris dans l'unité de données UL MAC PDU est plus haute qu'une priorité la plus haute d'un canal logique de liaison latérale compris dans une unité de données de protocole de commande d'accès à support de liaison latérale, SL MAC PDU, et la priorité correspondant à la demande SL SR est plus grande que la plus haute priorité du canal logique de liaison latérale compris dans l'unité de données SL MAC PDU ;

la quatrième condition comprend : la plus haute priorité du canal logique de liaison latérale compris dans l'unité de données SL MAC PDU est plus basse que ou égale à la priorité indiquée par le deuxième seuil ; et

la cinquième condition est : un ou plusieurs éléments de commande MAC CE spécifiés ou configurés comme suit sont envoyés sur la liaison montante :

un élément de commande MAC CE d'identité temporaire de réseau radio cellulaire, C-RNTI, un élément de commande MAC CE de confirmation d'allocation configurée, un élément de commande MAC CE de rapport d'état de tampon de liaison de non-remplissage, BSR, un élément de commande MAC CE de rapport d'état de tampon de liaison latérale de non remplissage, SL BSR, et un élément de commande MAC CE de rapport de marge de puissance, PHR.

3. Procédé selon la revendication 2, le procédé comprenant en outre :

lorsqu'une ou plusieurs de la première condition, de la deuxième condition, de la troisième condition, de la quatrième condition, de la cinquième condition et d'une sixième condition ne sont pas remplies, l'exécution, par le dispositif terminal, de la transmission en liaison latérale ; ou

lorsqu'une quelconque des une ou plusieurs de la première condition, de la deuxième condition, de la troisième condition, de la quatrième condition, de la cinquième condition et d'une sixième condition sont remplies, l'exécution, par le dispositif terminal, de la transmission en liaison montante,

la sixième condition étant : un message de processus d'accès aléatoire, RACH ou un message d'appel d'urgence est envoyé sur la liaison montante .

4. Procédé selon l'une quelconque des revendications 1 à 3, dans lequel la transmission en liaison montante est une transmission initiale ou une retransmission, et la transmission en liaison latérale est une transmission initiale ou une retransmission.

5. Procédé selon l'une quelconque des revendications 1 à 4, dans lequel la liaison montante prend en charge une première norme de communication ou une deuxième norme de communication, et la liaison latérale prend en charge la première norme de communication ou la deuxième norme de communication.

6. Appareil, l'appareil étant configuré de façon à exécuter le procédé selon l'une quelconque des revendications 1 à 5.

7. Support de stockage lisible par ordinateur comprenant une instruction qui, lorsqu'elle est exécutée par un appareil informatique, fait exécuter à l'appareil informatique le procédé selon l'une quelconque des revendications 1 à 5.

8. Progiciel comprenant une instruction qui, lorsqu'elle est exécutée par un appareil informatique, fait exécuter à l'appareil informatique le procédé selon l'une quelconque des revendications 1 à 5.

Network device 130

Uplink data transmission based on a Uu interface

Downlink data transmission based on the Uu interface

Sidelink data transmission based on a PC5 interface

Terminal device 110

Terminal device 120

FIG. 1

```
┌──────────────────┐          ┌──────────────────┐          ┌──────────────────┐
│  Network device  │          │  Terminal device │          │     Another      │
│                  │          │                  │          │  terminal device │
└────────┬─────────┘          └────────┬─────────┘          └────────┬─────────┘
         │                             │                             │
         │             ┌───────────────┴───────────────┐             │
         │             │ Step S201: Determine that     │             │
         │             │ uplink transmission and sidelink│            │
         │             │ transmission both exist        │            │
         │             └───────────────┬───────────────┘             │
         │             ┌───────────────┴───────────────┐             │
         │             │ Step S202: When one or more of │            │
         │             │ a first condition, a second    │            │
         │             │ condition, a third condition, and│           │
         │             │ a fourth condition are not met,│            │
         │             │ perform the sidelink           │            │
         │             │ transmission                   │            │
         │             └───────────────┬───────────────┘             │
         │                             │    Step S202: Perform the   │
         │                             │    sidelink transmission    │
         │                             ├────────────────────────────>│
         │             ┌───────────────┴───────────────┐             │
         │             │ Step S202: When any one of one │            │
         │             │ or more of a first condition, a│            │
         │             │ second condition, a third      │            │
         │             │ condition, and a fourth condition│           │
         │             │ is met, perform the uplink     │            │
         │             │ transmission                   │            │
         │             └───────────────┬───────────────┘             │
         │  Step S202: Perform the     │                             │
         │  uplink transmission        │                             │
         │<────────────────────────────┤                             │
         │                             │                             │
```

FIG. 2

Both UL Tx
and SL Tx exist

Does UL Tx
include both a PUCCH and
a PUSCH?

N

Does UL Tx
include the
PUCCH?

Y

Is the PUCCH
preferentially transmitted
compared with the
PUSCH?

Y

N

N

Perform priority
comparison on the PUCCH
and a PSSCH

Perform priority
comparison on the PUSCH
and the PSSCH

Perform
priority
comparison
on a UL SR
and an SL
MAC PDU

Perform
priority
comparison
on an SL SR
and the SL
MAC PDU

Perform
priority
comparison on
a UL ACK/
NACK and the
SL MAC PDU

Perform
priority
comparison on
an SL ACK/
NACK and the
SL MAC PDU

Perform priority
comparison on UL
data, a UL BSR, an
SL BSR, another
MAC CE, and the
SL MAC PDU

FIG. 3

| Network device | | Terminal device |
|---|---|---|

Step S401: Determine that sending of a UL SR and sending of an SL SR both exist

Step S402: When a priority of the UL SR is lower than a priority indicated by a first threshold and a priority of the SL SR is higher than a priority indicated by a second threshold, the terminal device sends the SL SR

Step S402: Send the SL SR

Step S402: When a priority of the UL SR is higher than a priority indicated by a first threshold or a priority of the SL SR is lower than or equal to a priority indicated by a second threshold, the terminal device sends the UL SR

Step S402: Send the UL SR

FIG. 4

```
┌─────────────────────┐                    ┌─────────────────────┐
│   Network device    │                    │   Terminal device   │
└─────────────────────┘                    └─────────────────────┘
          │                                           │
          │                        ┌──────────────────┴──────────────────┐
          │                        │  Step S501: The terminal device     │
          │                        │  determines that sending of a UL     │
          │                        │  MAC PDU and sending of an SL SR     │
          │                        │  both exist                          │
          │                        └──────────────────┬──────────────────┘
          │                        ┌──────────────────┴──────────────────┐
          │                        │  Step S502: When one or more of a   │
          │                        │  seventh condition, an eighth        │
          │                        │  condition, and a ninth condition    │
          │                        │  are not met, the terminal device    │
          │                        │  sends the SL SR                     │
          │                        └──────────────────┬──────────────────┘
          │   Step S502: Send the SL SR               │
          │◄──────────────────────────────────────────│
          │                        ┌──────────────────┴──────────────────┐
          │                        │  Step S502: When any one of one or   │
          │                        │  more of a seventh condition, an     │
          │                        │  eighth condition, and a ninth       │
          │                        │  condition is met, the terminal      │
          │                        │  device sends the UL MAC PDU         │
          │                        └──────────────────┬──────────────────┘
          │   Step S502: Send the UL MAC PDU          │
          │◄──────────────────────────────────────────│
          │                                           │
```

FIG. 5

```
┌──────────────────────────────────────────────────────────┐
│             Communication apparatus 600                   │
│   ┌──────────────────────┐      ┌──────────────────────┐  │
│   │ Transceiver module   │──────│ Processing module    │  │
│   │        610           │      │        620           │  │
│   └──────────────────────┘      └──────────────────────┘  │
└──────────────────────────────────────────────────────────┘
```

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LENOVO et al.** Remaining issue for prioritizing for NR V2X. *R2-1910283*